(19) Europäisches Patentamt
European Patent Office
Office européen des brevets

(11) **EP 2 073 171 A1**

(12) **EUROPEAN PATENT APPLICATION**
published in accordance with Art. 153(4) EPC

(43) Date of publication:
**24.06.2009 Bulletin 2009/26**

(51) Int Cl.:
***G06T 7/00*** *(2006.01)*

(21) Application number: **07859690.5**

(22) Date of filing: **19.11.2007**

(86) International application number:
**PCT/JP2007/072709**

(87) International publication number:
**WO 2008/062891 (29.05.2008 Gazette 2008/22)**

(84) Designated Contracting States:
**DE FR GB**
Designated Extension States:
**AL BA HR MK RS**

(30) Priority: **20.11.2006 JP 2006313212**

(71) Applicant: **Sony Corporation
Tokyo 108-0075 (JP)**

(72) Inventor: **ABE, Hiroshi
Tokyo 108-0075 (JP)**

(74) Representative: **Nicholls, Michael John
J.A. Kemp & Co.
14 South Square
Gray's Inn
London
WC1R 5JJ (GB)**

(54) **AUTHENTICATION DEVICE, REGISTER, REGISTRATION METHOD, REGISTRATION PROGRAM, AUTHENTICATION METHOD AND AUTHENTICATION PROGRAM**

(57) The present invention has been made to be able to highly probably prevent erroneous authentications due to a sham from taking place by means of a simple arrangement. The present invention generates an image signal S2 by shooting a finger, which is a predetermined biological site; generates a blood vessels pattern image in which a pattern of blood vessels showing characteristics of the blood vessels of the finger with respect to the image signal S1 is extracted as a characteristics parameter; calculates an image entropy $H_{im}$ based on the image signal S2; generates registered person identification information $T_{fv}$ by pairing the blood vessels pattern image and the image entropy $H_{im}$; and stores it in a flash memory 13 to register.

FIG. 5

**Description**

Technical Field

The present invention relates to an authentication apparatus, a registration apparatus, a registration method, a registration program, an authentication method and an authentication program that can particularly suitably be applied to biometrics authentication processes.

Background Art

Blood vessels have been and being typically used as a subject of biometrics' authentication. There have been proposed authentication apparatus that are designed to employ blood vessels a subject of biometrics authentication so as to register a pattern of blood vessels of a finger of a person picked up by camera shooting so as to be used as registered data or as collation data to be compared with registered data for collation (see, for example, Patent Document 1).

Patent Document 1: Jpn. Pat. Appln. Laid-Open Publication No. 2003-331272

However, authentication apparatus designed in the above-described way are accompanied by a problem that, when the subject of collation is image data of a blood vessels pattern and a so-called pseudo-finger showing a blood vessels pattern that resembles to the blood vessels pattern, the apparatus erroneously recognizes the fraudulent user as the proper user and hence is not able to eliminate such a sham.
On the other hand, there is a strong demand for downsized authentication apparatus and hence authentication apparatus having a simple configuration are desired from the viewpoint of downsizing.

Disclosure of the Invention

In view of the above-identified circumstances, there is provides an authentication apparatus, a registration apparatus, a registration method, a registration program, an authentication method and an authentication program that can highly probably prevent erroneous authentications due to a sham from taking place by means of a simple arrangement.
It is therefore desirable to overcome the above-mentioned drawbacks by generating an image of a subject of bio-identification by shooting the subject of bio-identification in a predetermined biological site, extracting a characteristics parameter for the subject of bio-identification by executing a predetermined characteristics extracting process on the image of the subject of bio-identification, computationally determining the image entropy according to the image of the subject of bio-identification, generating registered person identification information by pairing the characteristics parameter and the image entropy and storing it in predetermined memory means.
With this arrangement, it is possible to register the image entropy specific to the subject of bio-identification as registered person identification information in addition to the characteristics parameter that represents the characteristics of the subject of bio-identification and hence effectively prevent any erroneous authentication due to a sham from taking place.
In another aspect of the present invention, it is also desirable to generate a plurality of images of a subject of bio-identification by shooting the subject of bio-identification in a predetermined biological site of a to-be-registered person for a plurality of times within a predetermined time period, extracts a plurality of characteristics parameters for the subject of bio-identification by executing a predetermined characteristics extracting process on the plurality of images of the subject of bio-identification, computationally determines the plurality of image entropies of the plurality of images of the subject of bio-identification, computationally determines a plurality of types of weighted image entropies by weighting the plurality of image entropies with a plurality of types of weights of different patterns, determines the degree of dispersion of the plurality of types of weighted image entropies, identifies the predetermined site of the to-be-registered person as a living body or a non-living body according to the degree of dispersion and generates registered person identification information by pairing the characteristics parameters and the image entropies and storing it in predetermined memory means only when the predetermined site is identified as a living body.
With this arrangement, since a subject showing a low degree of dispersion of the plurality of types of weighted image entropies is considered to be strange to a living body when a predetermined site of the to-be-registered person is identified as a non-living body, it is eliminated to avoid a situation where a non-biological pseudo-finger is erroneously registered in advance. Thus, it is possible to effectively prevent any erroneous authentication from taking place.
In still another aspect of the present invention, it is also desirable to generate a plurality of images of a subject of bio-identification by shooting the subject of bio-identification in a predetermined biological site of a to-be-authenticated person for a plurality of times within a predetermined time period, extracts a plurality of characteristics parameters for the subject of bio-identification by executing a predetermined characteristics extracting process on the plurality of images of the subject of bio-identification, computationally determines the plurality of image entropies of the plurality of images of the subject of bio-identification, computationally determines a plurality of types of weighted image entropies by weighting the plurality of image entropies with a plurality of types of weights of different patterns, determines the degree of dispersion of the plurality of types of weighted image entropies, identifies the predetermined site of the to-be-registered person as a living body or a non-living body according to the degree of dispersion, denies the authenticity of the to-be-authenticated person when the predetermined site is identified as a non-living body but acknowledges the authenticity of the to-be-authenticated person by executing an authentication process only when the predetermined site is identified as a living body.

With this arrangement, since an object showing a low degree of dispersion of the plurality of types of weighted image entropies is considered to be strange to a living body when a predetermined site of the to-be-registered person is identified as a non-living body, the authenticity of the to-be-authenticated person is denied straight away and an authentication process is executed only when the predetermined site is a living body. Thus, it is possible to efficiently and effectively eliminate any sham using a pseudo-finger.

Thus, there are provided an authentication apparatus, a registration method and a registration program that can highly probably prevent any erroneous authentication due to a sham with a simple arrangement because it is possible to register the image entropy specific to the subject of bio-identification as registered person identification information in addition to the characteristics parameter that represents the characteristics of the subject of bio-identification and hence effectively prevent any erroneous authentication due to a sham from taking place.

Additionally, there are provided a registration apparatus, a registration method and a registration program that can highly probably prevent any erroneous authentication due to a sham with a simple arrangement because, since an object showing a low degree of dispersion of the plurality of types of weighted image entropies is considered to be strange to a living body when a predetermined site of the to-be-registered person is identified as a non-living body, it is eliminated to avoid a situation where a non-biological pseudo-finger is erroneously registered in advance and hence it is possible to effectively prevent any erroneous authentication from taking place.

Still additionally, there are provided an authentication apparatus, an authentication method and an authentication program that can highly probably prevent any erroneous authentication due to sham with a simple arrangement because, since an object showing a low degree of dispersion of the plurality of types of weighted image entropies is considered to be strange to a living body when a predetermined site of the to-be-registered person is identified as a non-living body, the authenticity of the to-be-authenticated person is denied straight away and an authentication process is executed only when the predetermined site is a living body and it is possible to efficiently and effectively prevent any sham using a pseudo-finger.

Brief Description of the Drawings

FIG. 1 is a schematic illustration of an image entropy that varies depending on if the image is masked or not.
FIG. 2 is a schematic illustration of the results obtained by shooting a pseudo-finger and a human finger.
FIG. 3 is a graph of the characteristic curves schematically illustrating changes in image entropies of continuous images showing no movement.
FIG. 4 is a schematic block diagram of authentication apparatus according to the first and second embodiments of the present invention, illustrating the overall configuration thereof.
FIG. 5 is a schematic block diagram of the control section of the first embodiment, illustrating the configuration thereof.
FIG. 6 is a flowchart of the blood vessels registration process sequence of the first embodiment.
FIG. 7 is a flowchart of the authentication process sequence of the first embodiment.
FIG. 8 is a graph of a logarithmic curve at and near $Log_2 390$.
FIG. 9 is a graph schematically illustrating approximation of the first degree of logarithm.
FIG. 10 is a graph schematically illustrating the sizes and the accuracies of tables of logarithms.

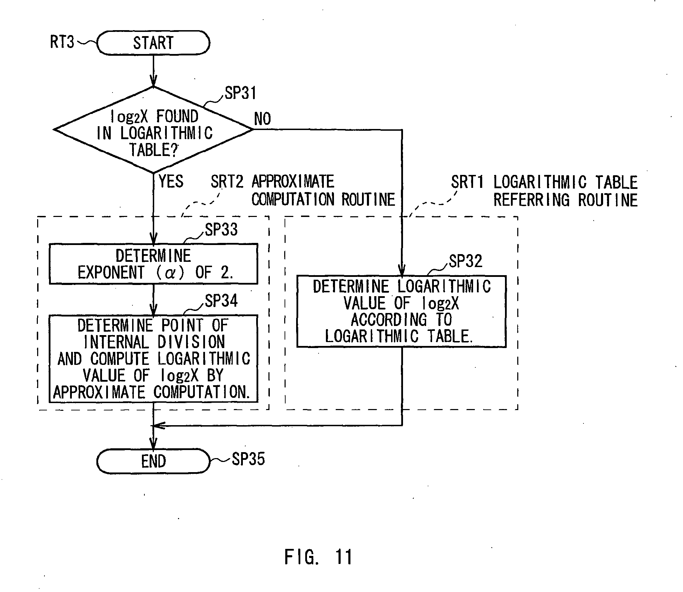

FIG. 11 is a flowchart of a logarithmic computation process sequence for illustrating the basic concept thereof.

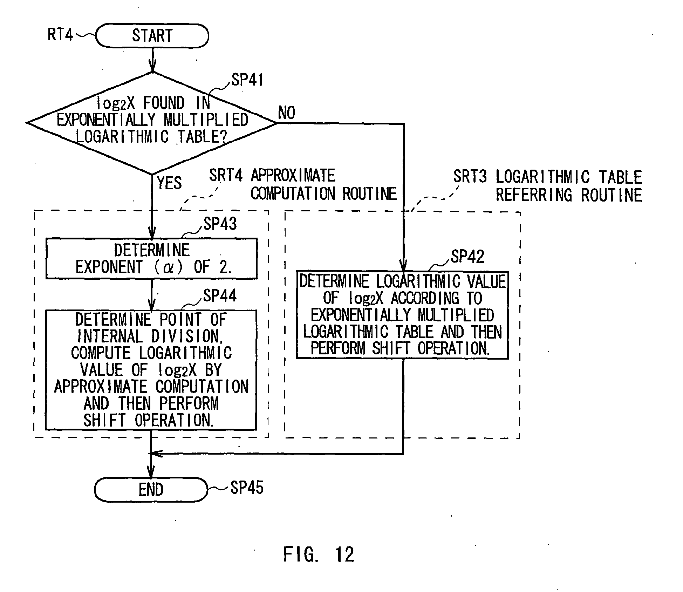

FIG. 12 is a flowchart of a specific logarithmic computation process sequence.
FIG. 13 is a graph schematically illustrating the results obtained for logarithmic computation speeds.
FIG. 14 is schematic illustrations of standard images.
FIG. 15 is a graph schematically illustrating the entropy errors of standard images.
FIG. 16 is a graph of characteristics schematically illustrating pixel value histograms and weights WL.
FIG. 17 is a graph of characteristics schematically illustrating changes in the image entropies of continuous images (with no weight).
FIG. 18 is a graph of characteristics schematically illustrating changes in the image entropies of continuous images (with weights).

FIG. 19 is a graph schematically illustrating the relationship between the pixel value histogram of human finger 1 and the weight.

FIG. 20 is a graph schematically illustrating the relationship between the pixel value histogram of human finger 2 and the weight.

FIG. 21 is a table schematically illustrating the average values and the standard deviations of image entropies.

FIG. 22 is a graph of characteristics schematically illustrating the relationship between the pixel value histogram and the weight WL2.

FIG. 23 is a graph of characteristics schematically illustrating the difference of entropy change of a continuous image between weight WL and weight WL2.

FIG. 24 is a table schematically illustrating the standard deviation of image entropy.

FIG. 25 is a schematic block diagram of the control section of the second embodiment, illustrating the configuration thereof.

FIG. 26 is a flowchart of the blood vessels registration process sequence of the second embodiment.

FIG. 27 is a flowchart of the authentication process sequence of the second embodiment.

Best Mode for Carrying Out the Invention

Now the present invention will be described in greater detail by referring to the accompanying drawings that illustrate preferred embodiments of the invention.

(1) First embodiment

(1-1) Basic principle of first embodiment

The basic principle of the first embodiment will be described here first.

(1-1-1) Exclusive control using image entropy

The first embodiment provides a technique for eliminating any situation where an improper authentication successes by using a sham image or a randomly input image when the authentication utilizes a characteristic quantity of the image.

The first embodiment is adapted to extract a characteristic quantity of an image of the pattern of blood vessels such as finger veins and holding not only it as template but also the image entropy of the original image used for extracting the characteristic quantity as template to make it possible to eliminate any sham image in a stage prior to an authentication process.

(1-1-2) Image entropy

An image entropy is an information entropy using luminance values of an image. In other words, it in fact represents a digest value of the luminance pattern of the image at the time of picking up the image.

If the probability of appearance of a pixel value is Pi, its self-adjoint information can be expressed as $-\log_2 p_i$, which is the total sum of the expected values $-p_i \log_2 p_i$ of the self-adjoint information. In other words, image entropy $H_{img}$ is defined by formula (1) shown below.

$$H = -\sum_{i=1}^{N} p_i \log_2 p_i \qquad \cdots\cdots \quad (1)$$

If the image has 256 tones of pixel value L (L = 0, ..., 255) in terms of an 8-bit grey scale, the image entropy $H_{img}$ can be expressed by formula (2) shown below.

$$H_{img} = -\sum_{L=0}^{255} p_L \log_2 p_L \qquad \cdots\cdots (2)$$

If the image has a width of $S_W$, a height of $S_H$, a total pixel number of $N = S_W \times S_H$ and the number of pixels of the pixel value L is $n_L$, the probability of appearance $p_L$ of the pixel value L is expressed by formula (3) shown below.

$$p_L = \frac{n_L}{N} \qquad \cdots\cdots (3)$$

Therefore, by using the formula (3), the image entropy $H_{img}$ is expressed by formula (4) shown below.

$$H_{img} = -\sum_{L=0}^{255} p_L \log_2 p_L$$

$$= -\sum_{L=0}^{255} \frac{n_L}{N} \log_2 \left( \frac{n_L}{N} \right)$$

$$= -\frac{1}{N} \sum_{L=0}^{255} n_L \left( \log_2 n_L - \log_2 N \right)$$

$$= \frac{1}{N} \sum_{L=0}^{255} n_L \log_2 N - \frac{1}{N} \sum_{L=0}^{255} n_L \log_2 n_L$$

$$= \log_2 N - \frac{1}{N} \sum_{L=0}^{255} n_L \log_2 n_L \qquad \cdots\cdots (4)$$

Since the pixel value $n_L$ is a positive value, it is possible to instantaneously obtain the image entropy $H_{img}$ in a processing system that is not adapted to high speed processing and logarithmic processing simply by having a table of $\log_2 n_L$.

(1-1-3) Image entropy of masked image

Now, let us consider the image entropy $H_{img}$ of an image where a predetermined part thereof is masked. Then, the masked part shows a certain pixel value (which is normally equal to nil) and significant data are found in the remaining part thereof.

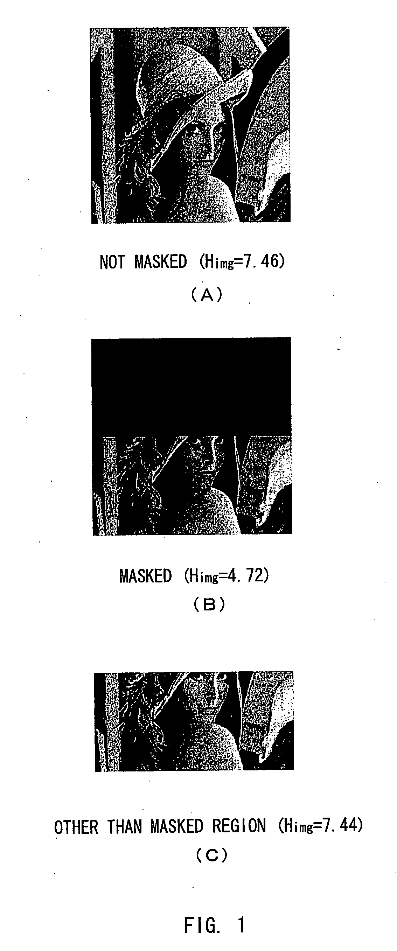

FIG. 1(A) shows a monochromatic grey scale image of a size of 256 × 256 pixels expressed by means of an 8-bit grey scale. The image entropy $H_{img}$ of the image is determined to be "7.46" by means of the above-described formula (4) in an unmasked state.

FIG. 1(B) shows a grey scale image same as that of FIG. 1(A) but whose upper half part is masked. The image entropy $H_{img}$ of this image is determined to be "4.72" by means of the above-described formula (4).

Since a half of the total number of pixels is made to show a same luminance value (nil) in the grey scale image of FIG. 1(B), it will be seen that the image entropy $H_{img}$ of the image is significantly reduced if compared with the grey scale image of FIG. 1(A). In other words, while the image of FIG. 1(B) is same as that of FIG. 1(A), the image entropy $H_{img}$ of the image of FIG. 1(B) is reduced remarkably because of the large masked region.

Therefore, it is necessary to computationally determine the image entropy $H_{img}$ of only the unmasked region of the grey scale image that is partly masked. The image entropy $H_{img}$ of the grey scale image of FIG. 1(C) is computed to be equal to "7.44", which does not show any significant difference from the original unmasked grey scale image of FIG. 1(A).

From above, it will be seen that, when processing an image of a blood vessels pattern to which a mask is applied, it is necessary to take the image of the part other than the masked region as subject of processing for computing the image entropy $H_{img}$.

(1-1-4) Personal authentication by means of finger blood vessels

Thus, the above-described technique is used when authenticating a person by means of a pattern of finger blood vessels.

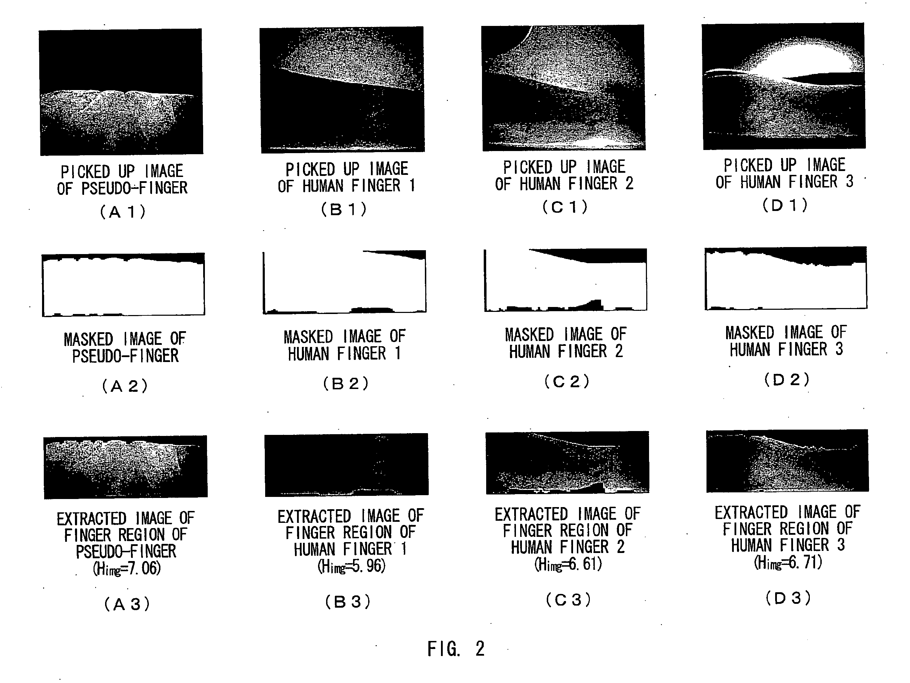

FIGS. 2(A1) through 2(A3) respectively illustrate an image picked up by shooting a pseudo-finger that is made of rubber, an image of a masked region of the pseudo-finger and an image obtained by extracting the finger region after the masking process. FIGS. 2(B1) through 2(B3) respectively illustrate an image picked up by shooting human finger 1, an image of a masked region of the human finger 1 and an image obtained by extracting the masked finger region after the masking process. FIGS. 2(C1) through 2(C3) respectively illustrate an image picked up by shooting human finger 2, an image of a masked region of the human finger 2 and an image obtained by extracting the masked finger region after the masking process. FIGS. 2(D1) through 2(D3) respectively illustrate an image picked up by shooting human finger 3, an image of a masked region of the human finger 3 and an image obtained by extracting the masked finger region after the masking process.

Then, the image entropy $H_{img}$ is computed for each of the images obtained by extracting the finger region of the masked pseudo-finger, that of the masked human finger 1, that of the masked human finger 2 and that of the masked human finger 3 after the respective masking processes. The image entropy $H_{img}$ of the image of the extracted finger region of the pseudo-finger is "7.06" and the image entropy $H_{img}$ of the image of the extracted finger region of the human finger 1 is "5.96", while the image entropy $H_{img}$ of the image of the extracted finger region of the human finger 2 is "6.61" and the image entropy $H_{img}$ of the image of the extracted finger region of the human finger 3 is "6.71".

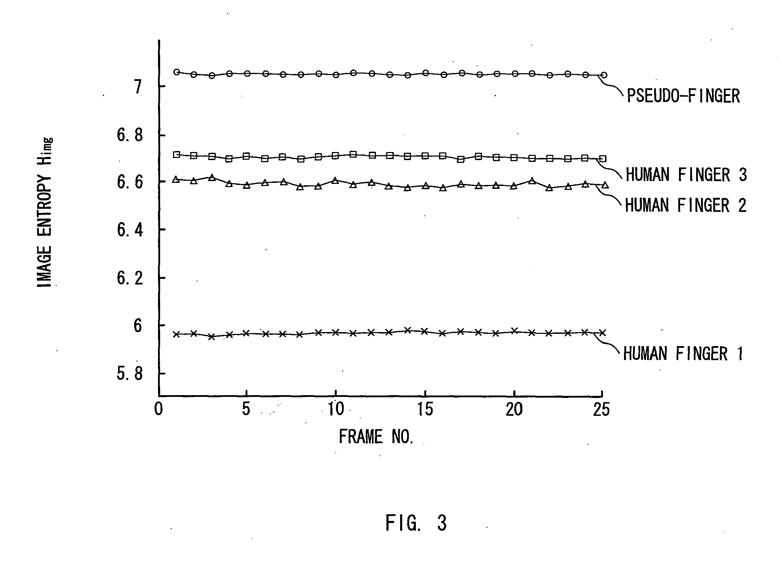

FIG. 3 is a graph schematically illustrating the change in the image entropy $H_{img}$ of a continuous image of an extracted ringer region of each of the pseudo-finger, the human finger 1, the human finger 2 and the human finger 3 that are held stationary for a predetermined time period. As seen from FIG. 3, the value of image entropy $H_{img}$ provides an ability of identifying individuals to a certain extent. However, it is not easy to reliably identify the person of the human finger 2 and the person of the human finger 3 when the blood vessels pattern of the human finger 2 and that of the human finger 3 resemble each other very much because the values of the image entropies $H_{img}$ thereof are closed to each other.

(1-2) Authentication apparatus of first embodiment

Now the authentication apparatus of the first embodiment to be used for the above-described image entropy $H_{img}$ for an authentication process will be described below.

(1-2-1) Circuit configuration of authentication apparatus of first embodiment

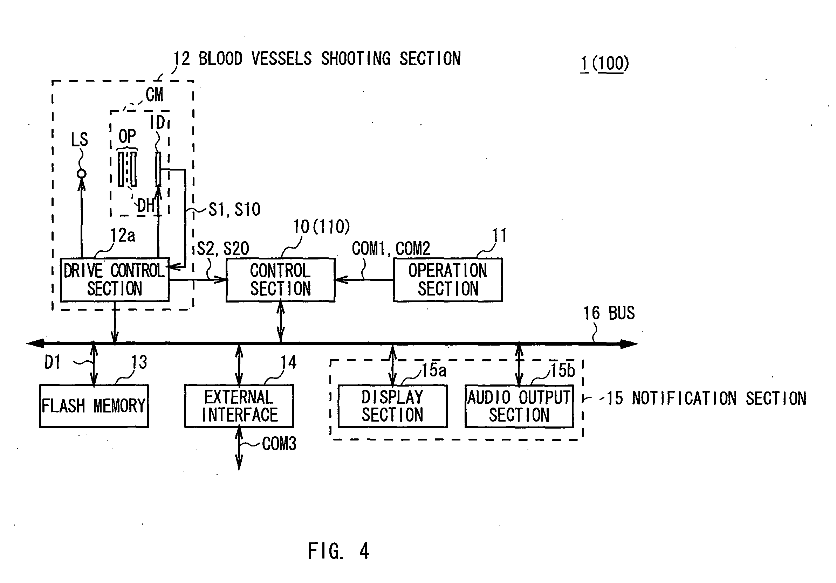

FIG. 4 is a schematic block diagram of an authentication apparatus 1 according to the first embodiment of the present invention, illustrating the overall configuration thereof. Referring to FIG. 4, the authentication apparatus 1 of the first embodiment includes a operation section 11, a blood vessels shooting section 12, a flash memory 13, an interface for exchanging data with the outside of the apparatus (to be referred to as external interface hereinafter) 14 and a notification section 15 connected to a control section 10 by way of a bus 16.

The control section 10 of the authentication apparatus 1 is formed by using a microcomputer including a central processing unit (CPU) for controlling the overall operation of the authentication apparatus 1, a read only memory (ROM) storing various programs and defined pieces of information and a random access memory (RAM) to be used as work memory of the CPU.

The control section 10 is adapted to receive execution command COM1 for operating in a mode (to be referred to as blood vessels registration mode hereinafter) for registering blood vessels of a to-be-registered user (to be referred to as to-be-registered person or registered person hereinafter) and execution command COM2 for operating in a mode for determining the authenticity of the registered person (to be referred to as authentication mode hereinafter) in response to an operation of the operation section 11 by the user.

Upon receiving the execution command COM1 or COM2, the control section 10 determines the mode of execution according to the execution command COM1 or COM2, whichever appropriate, reads out the application program that corresponds to the outcome of the mode determining operation from the ROM, unfolds it on the RAM and appropriately controls the blood vessels shooting section 12, the flash memory 13, the external interface 14 and the notification section 15 to execute an operation in the blood vessels registration mode or the authentication mode, whichever appropriate.

(1-2-2) Blood vessels registration mode

If it is decided to select the blood vessels registration mode for the mode of operation, the control section 10 of the authentication apparatus 1 goes into the blood vessels registration mode and controls the blood vessels shooting section 12 to execute a registration process.

Then, the drive control section 12a of the blood vessels shooting section 12 controls the operation of driving one or more near-infrared light sources LS for irradiating near infrared rays onto the finger of the to-be-registered person placed at a predetermined position of the authentication apparatus 1 and image pickup element ID of a camera CM, which may typically be a charge coupled device (CCD).

As a result, the near infrared rays irradiated onto the finger passes the inside of the finger, although some of them are reflected and scattered, and enters the image pickup element ID of the blood vessels shooting section 12 as rays projecting blood vessels of the finger (to be referred to as blood vessels projecting rays hereinafter) by way of optical system OP and diaphragm DH. The image pickup element ID performs an operation of photoelectric conversion of the blood vessels projecting rays and then outputs the outcome of the photoelectric conversion to the drive control section 12a as video signal S1.

Note that the image of the video signal S1 output from the image pickup element ID includes not only the blood vessels in the inside of the finger but also the profile and the finger print of the finger because the near infrared rays irradiated onto the finger are reflected by the surface of the finger before they enter the image pickup element ID.

The drive control section 12a of the blood vessels shooting section 12 adjusts the lens positions of the optical lenses of the optical system OP so as to bring the blood vessels in the inside of the finger into focus on the basis of the pixel value of the image and also the aperture value of the diaphragm DH of the optical system OP so as to make the quantity of incident light entering the image pickup element ID show an appropriate level and, after the adjustment, supplies the video signal S2 output from the image pickup element ID to the control section 10.

The control section 10 executes a predetermined video process on the video signal S2 to generate a blood vessels pattern image of a blood vessels pattern extracted to show the characteristics of the blood vessels of the finger and, at the same time, computationally determines the image entropy $H_{img}$ according to the blood vessels pattern image. Then, the control section 10 stores the information (to be referred to as registered person identification template data hereinafter) $T_{fv}$ for identifying the registered person prepared by combining the blood vessels pattern image and the image entropy $H_{img}$ to end the registration process.

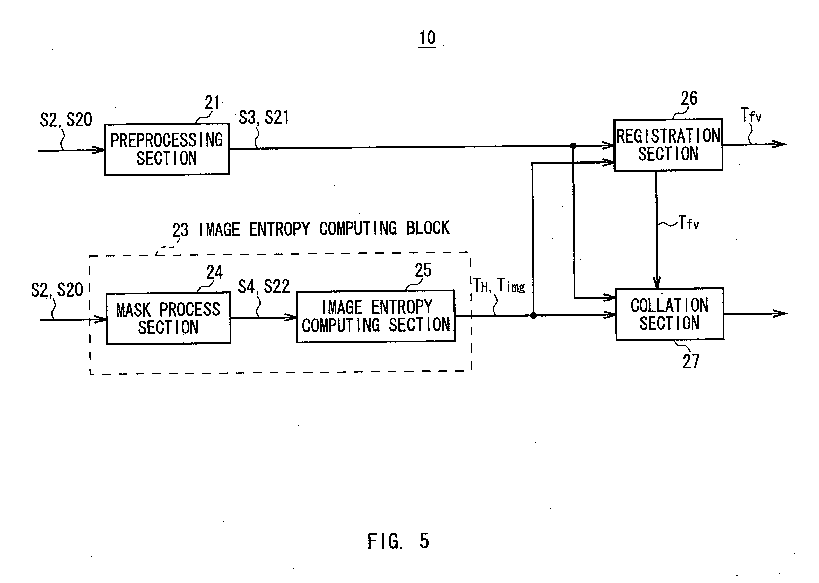

Now, the video process that the control section 10 executes will be described in greater detail below. Referring to FIG. 5, the control section 10 has a preprocessing section 21, an image entropy computing block 23, a registration section 26 and a collation section 27 as functional components and inputs the video signal S2 supplied from the blood vessels shooting section 12 to the preprocessing section 21 and also to mask process section 24 of the image entropy computing block 23.

The preprocessing section 21 sequentially executes an analog/digital conversion process, a predetermined contour extracting process including a Sobel filter process, a predetermined smoothing process including a Gaussian filter process, a binarization process and a line narrowing process and then sends out the video data (to be referred to as template video data hereinafter) representing the blood vessels pattern obtained as a result of the above processes to the registration section 26.

The mask process section 24 of the image entropy computing block 23 generates a masked image (see FIGS. 2(A1) through 2(D3)) for extracting only a finger region where the blood vessels pattern is shown according to the video signal 2 supplied from the blood vessels shooting section 12 and generates an extracted finger region image S4 by applying the masked image. Then, the mask process section 24 sends out the extracted finger region image S4 to the image entropy computing section 25.

The image entropy computing section 25 computationally determines the image entropy $H_{img}$ by means of the above-described formula (4) on the basis of the extracted finger region image S4 and sends it out to the registration section 26 as template entropy $T_H$ that is an element for constituting registered person identification template data $T_{fv}$.

The registration section 26 generates registered person identification template data $T_{fv}$ by pairing the template video data S3 representing the blood vessels pattern image supplied from the preprocessing section 21 and the template entropy $T_H$ supplied from the image entropy computing section 25 and stores it in the flash memory 13 to end the registration process.

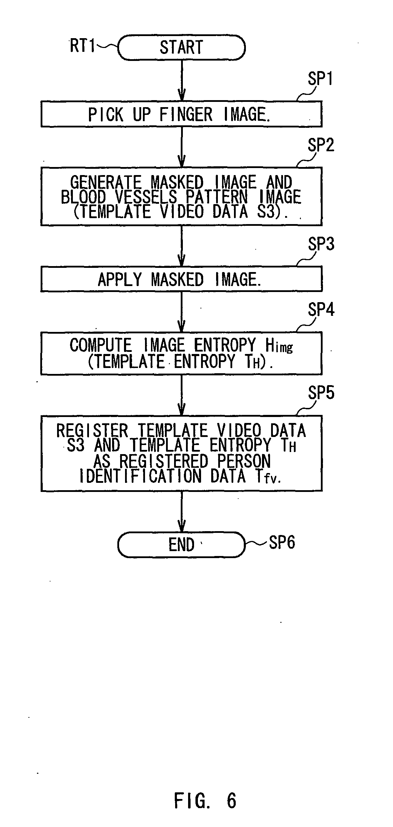

The control section 10 of the authentication apparatus 1 operates in the blood vessels registration mode in the above-described manner. Now, the blood vessels registration process sequence that is executed in the blood vessels registration mode will be described below by referring to FIG. 6.

Referring to FIG. 6, the control section 10 of the authentication apparatus 1 starts with the starting step of routine RT1 and proceeds to the next step, or Step SP1, where it generates a video signal S2 by shooting the user's finger by means of the blood vessels shooting section 12 and sends it out to the preprocessing section 21 of the control section 10 and also to the mask process section 24 of the image entropy computing section 23 before it moves to the next step, or Step SP2.

In Step SP2, the control section 10 generates a masked image for extracting only the finger region where the blood vessels pattern is shown according to the video signal S2 supplied from the blood vessels shooting section 12 by means of the mask process section 24 and also a template video data S3 representing the blood vessels pattern image by means of the preprocessing section 21 and then moves to the next step, or Step SP3.

In Step SP3, the control section 10 generates extracted finger region image S4 by applying the video signal S2 supplied from the blood vessels shooting section 12 to the masked image generated in Step SP2 and then moves to the next step, or Step SP4.

In Step SP4, the control section 10 computationally determines the image entropy $H_{img}$ by means of the above-described formula (4) on the basis of the extracted finger region image S4 as template entropy $T_H$ and then moves to the next step, or Step SP5.

In Step SP5, the control section 10 generates registered person identification template data $T_{fv}$ by paring the template video data S3 representing the blood vessels pattern image generated in Step SP2 and the template entropy $T_H$ computationally determined in Step SP4 and stores and registers it in the flash memory 13 before it moves to the next step, or Step SP6, to end the blood vessels registration process.

(1-2-3) Authentication mode

If, on the other hand, it is decided to select the authentication mode for the mode of operation, the control section 10 of the authentication apparatus 1 goes into the authentication mode and controls the blood vessels shooting section 12 (FIG. 4) so as to execute an authentication process as in the case of the blood vessels shooting mode.

Im this case, the drive control section 12a of the blood vessels shooting section 12 controls the operation of driving the near-infrared light sources LS and the image pickup element ID and also adjusts the lens positions of the optical lenses and the aperture value of the diaphragm DH of the optical system OP according to the video signal S10 output from the image pickup element ID and then sends out the video signal S20 output from the image pickup element ID after the adjustment to the control section 10.

The control section 10 (FIG. 5) executes a video process similar to the one it executes in the above-described blood vessels registration mode on the video signal S20 by means of the preprocessing section 21 and also an image entropy computing process similar to the one it executes in the above-described blood vessels registration mode by means of the image entropy computing block 23 and reads out the registered person identification template data $T_{fv}$ registered in the flash memory 13 in advance in the blood vessels registration mode.

Then, the control section 10 compares the video data representing the blood vessels pattern image obtained by the preprocessing section 21 and the image entropy $H_{img}$ obtained by the image entropy computing block 23 with the template video data S3 and the template entropy $T_H$ of the registered person identification template data $T_{fv}$ read out from the flash memory 13 for collation and determines if the user having the finger is the registered person (authorized user) or not according to the degree of agreement of the collation.

Since the template entropy $T_H$ represents in fact a digest value of the luminance pattern of the video signal S2 and hence it does not represent an accurate value, the determination according to the degree of agreement of the collation needs to have some latitude when comparing it with the image entropy $H_{img}$ for collation.

Thus, the object person of authentication is highly probably the registered person him- or herself when the value of the template entropy $T_H$ and that of the image entropy $H_{img}$ are close to each other, whereas the object person of authentication is highly probably not the registered person and but some other person when the value of the template entropy $T_H$ and that of the: image entropy $H_{img}$ differ from each other to a large extent.

When the control section 10 determines that the object person of authentication who placed one of his or her fingers in the authentication apparatus is the registered person, it generates execution command COM3 for causing the operation processing apparatus (not shown) connected to the external interface 14 to perform a predetermined operation and transfers it to the operation processing apparatus by way of the external interface 14.

If the operation processing apparatus connected to the external interface 14 is a locked door, the control section 10 transfers execution command COM3 for unlocking the door to the door.

If, on the other hand, the operation processing apparatus connected to the external interface 14 is a computer that has a plurality of operation modes and the operation modes are partly restricted, the control section 10 transfers execution command COM3 for releasing the restricted operation modes to the computer.

While two examples are cited above for the operation processing apparatus, the present invention is by no means limited thereto and some other operation processing apparatus may appropriately be selected. While the operation processing apparatus is connected to the external interface 14 in this embodiment, the software or the hardware of the operation processing apparatus may alternatively be installed in the authentication apparatus 1.

When, on the other hand, the control section 10 determines that the object person of authentication who placed one of his or her fingers in the authentication apparatus is not the registered person, it displays so by way of a display section 15a of the notification section 15 and outputs a sound of notification by way of audio output section 15b of the notification section 15 so that the authentication apparatus 1 can notifies that the object person of authentication is determined to be not the registered person.

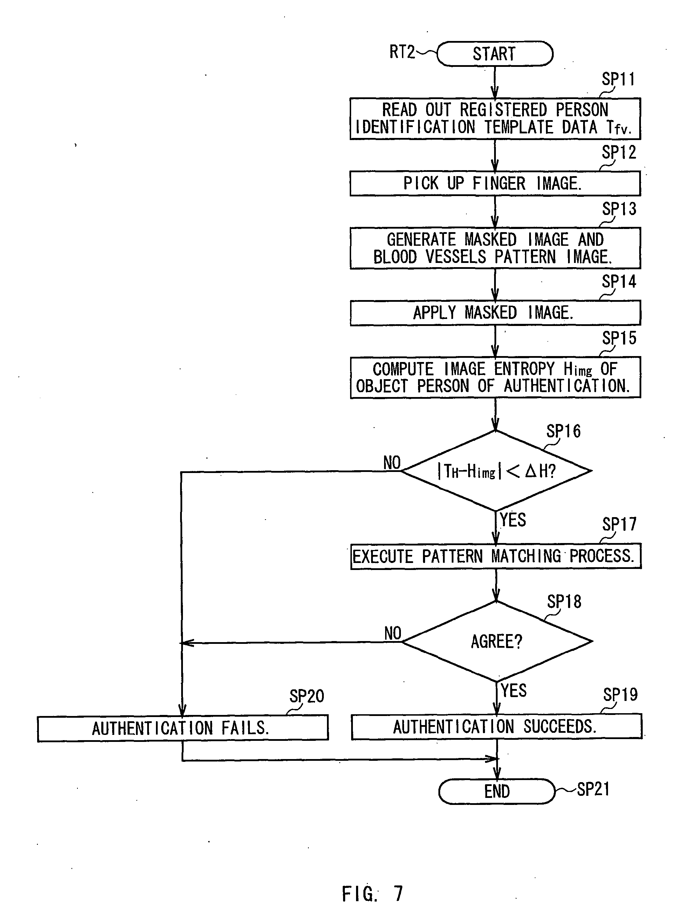

Thus, the authentication apparatus 1 executes the authentication process in the authentication mode in the above-described manner. Now, the authentication process sequence in the authentication mode will be described below by referring to FIG. 7.

Referring to FIG. 7, the control section 10 of the authentication apparatus 1 starts with the starting step of routine RT2 and proceeds to the next step, or Step SP11, where it reads out the registered person identification template data $T_{fv}$ (the template video data S3 and the template entropy $T_H$) that is registered in advance in the flash memory 13 and then moves to the next step, or Step SP12.

In Step SP12, the control suction 10 generates a video signal S20 by shooting the finger of the user placed in the apparatus and sends it out to the preprocessing section 21 of the control section 10 and also to the mask process section 24 of the image entropy computing section 23 and then moves to the next step, or Step SP13.

In Step SP13, the control section 10 generates video data S21 representing the blood vessels pattern image according to the video signal S20 by means of the preprocessing section 21 and also a masked image for extracting only the finger region where the blood vessels pattern is shown according to the video signal S20 supplied from the blood vessels shooting section 12 and then moves to the next step, or Step SP14.

In Step SP14, the control section 10 generates extracted finger region image S22, applying the masked image generated in Step SP13 to the video signal S20 supplied from the blood vessels shooting section 12 and then moves to the next step, or Step SP15.

In Step SP15, the control section 10 computationally determines the image entropy $H_{img}$ of the object person of authentication who wants authentication according to the extracted finger region image S22 and sends it out to the collation section 27 before it moves to the next step, or Step SP16.

In Step SP16, the control section 10 determines if the absolute value of the difference between the template entropy $T_H$ of the registered person identification template data $T_{fv}$ read out in Step SP11 and the image entropy $H_{img}$ of the object person of authentication computationally determined in Step SP16 is smaller than predetermined permissible error $\Delta H$ or not.

It is determined if the absolute value of the difference between the template entropy $T_H$ of the registered person identification template data $T_{fv}$ and the image entropy $H_{img}$ of the object person of authentication is smaller than the predetermined permissible error $\Delta H$ or not because the image entropy $H_{img}$ in fact represents a digest value of the luminance pattern of the video signal S2 and hence it does not represent an accurate value so that the determination needs to have some latitude when comparing it with the template entropy $T_H$ at the time of collation.

If the result of the determination is negative, it means that the image entropy $H_{img}$ of the object person of authentication is not found within a certain range from the value of the template entropy $T_H$ that is registered in advance and hence the luminance distribution of the extracted finger region image S22 from which the image entropy $H_{img}$ is computed differs to a large extent from the luminance distribution of the extracted finger region image S4 from which the template entropy $T_H$ is computed. Then, the control section 10 moves to the next step, or Step SP20.

In Step SP20, the control section 10 determines that the object person of authentication does not agree with the registered person and hence the authentication failed because the absolute value of the difference between the template entropy $T_H$ and the image entropy $H_{img}$ of the object person of authentication is greater than predetermined permissible error $\Delta H$ and then moves to the next step, or Step SP21.

If, on the other hand, the result of determination in Step SP16 is positive, it means that the image entropy $H_{img}$ of the object person of authentication is found within a certain range from the value of the template entropy $T_H$ that is registered in advance and hence the luminance distribution of the extracted finger region image S22 from which the image entropy $H_{img}$ is computed is similar to the luminance distribution of the extracted finger region image S4 from which the template entropy $T_H$ is computed so that the object person of authentication agrees with the registered person from the entropy point of view. Then, the control section 10 moves to the next step, or Step SP17.

In Step SP17, the control section 10 executes a pattern matching process, using the template video data S3 of the registered person identification template $T_{fv}$ read out in Step SP11 and the video data S21 representing the blood vessels pattern image generated in Step SP13, and then moves to the next step, or Step SP18.

In Step SP18, the control section 10 determines if the result of the pattern matching process in Step SP17 indicates agreement or not. If the result of the determination is negative; it means that the object person of authentication does not agree with the registered person from the pattern matching point of view. Then, the control section 10 moves to the next step, or Step SP20, where it determines that the authentication failed so that it moves to the next step, or Step SP21 to end the process.

If, on the other hand, the result of the determination in Step SP18 is positive, it means that the object person of authentication agrees with the registered person from the pattern matching point of view. Then, the control section 10 moves to the next step, or Step SP19.

In Step SP19, the control section 10 determines that the object person of authentication agrees with the registered person both from the entropy point of view and the pattern matching point of view. Then, the control section 10 moves to the next step, or Step SP21 to end all the authentication process.

(1-3) Technique of raising logarithmic computation speed at image entropy computing section 25

Meanwhile, for the image entropy computing section 25 of the image entropy computing block 23, it is necessary to perform a logarithmic computation with a base of logarithm of 2, using the formula (4), to determine the image entropy $H_{img}$.

However, the logarithmic computation for determining the image entropy $H_{img}$ with a base of logarithm of 2 has drawbacks such as that it involves decimal point computations so that the process load of the image entropy computing section 25 is large and that a large memory capacity is required for the application program for performing decimal point computations. Therefore, there is a demand for techniques that can raise the logarithmic computation speed of performing logarithmic computations highly accurately in a short period time with a small process load and without requiring a large memory capacity.

(1-3-1) Basic idea of technique for raising logarithmic computation speed

Now, let us consider how the value of $\log_2 x$ for an arbitrarily selected integer x with a base of logarithm of 2 can be performed highly accurately within a short period of time. More specifically, formula (5) shown below holds true for $\log_2 x$.

$$\log_2\left(2^\alpha \cdot y\right) < \log_2 x < \log_2\left(2^\alpha \cdot (y+1)\right) \qquad \cdots\cdots (5)$$

If y, α and x are integers in the formula (5), formula (6) shown below can be obtained by expanding the formula (5).

$$\log_2 2^\alpha + \log_2 y < \log_2 x < \log_2 2^\alpha + \log_2(y+1) \qquad \cdots\cdots (6)$$

The formula (7) shown below can also be obtained.

$$\alpha + \log_2 y < \log_2 x < \alpha + \log_2(y+1) \qquad \cdots\cdots (7)$$

Thus, the image entropy computing section 25 can approximate the value of $\log_2 x$ to a certain extent when it holds the logarithm values of $\log_2 y$ and those of $\log_2 (y + 1)$ by means of a table of logarithms in advance.

For example, when x = 100,000, $\log_2 x$ is expressed by formula (8) below according to the formula (5).

$$\log_2\left(2^8 \cdot 390\right) < \log_2 100000 < \log_2\left(2^8 \cdot 391\right) \qquad \cdots\cdots (8)$$

Thus, the logarithmic value of $\log_2 100,000$ is found between the logarithmic value of "8 + $\log_2$ 390" and that of "8 + $\log_2$ 391".

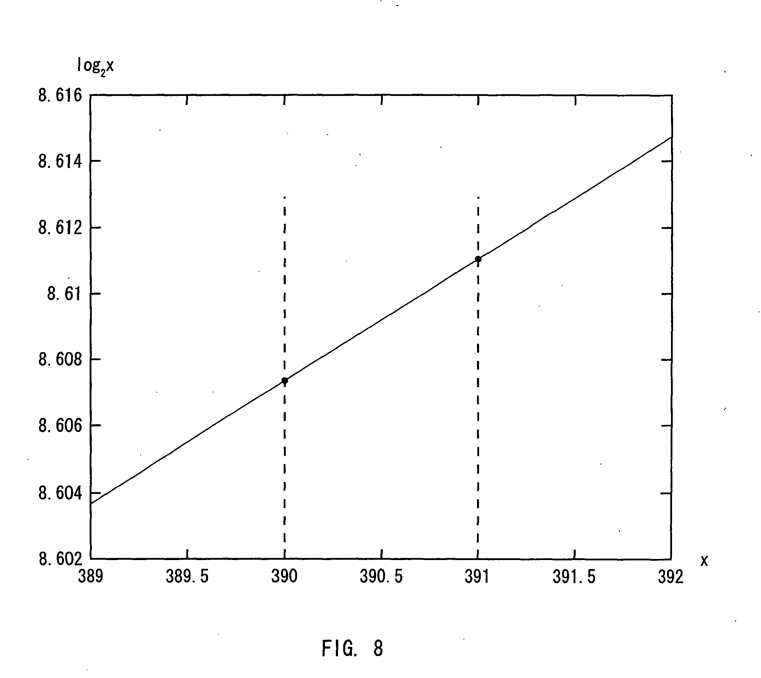

As seen from FIG. 8, the logarithmic curve near $\log_2 390$ can be approximated by a straight line within the

range of $390 \leq x \leq 391$. It will also be seen that the logarithmic curve can similarly be approximated by a straight line in other ranges.

Thus, $\log_2 100,000$ is linearly approximated within the range of $390 \leq x \leq 391$. Firstly, since $\log_2 100,000 = \log_2 (2^8 \cdot 390 + 169)$, $\log_2 100,000$ can be approximated by internally dividing the difference of 256 between $\log_2 (2^8 \cdot 390)$ and $\log_2 (2^8 \cdot 391)$ to a ratio of 160 : 96.

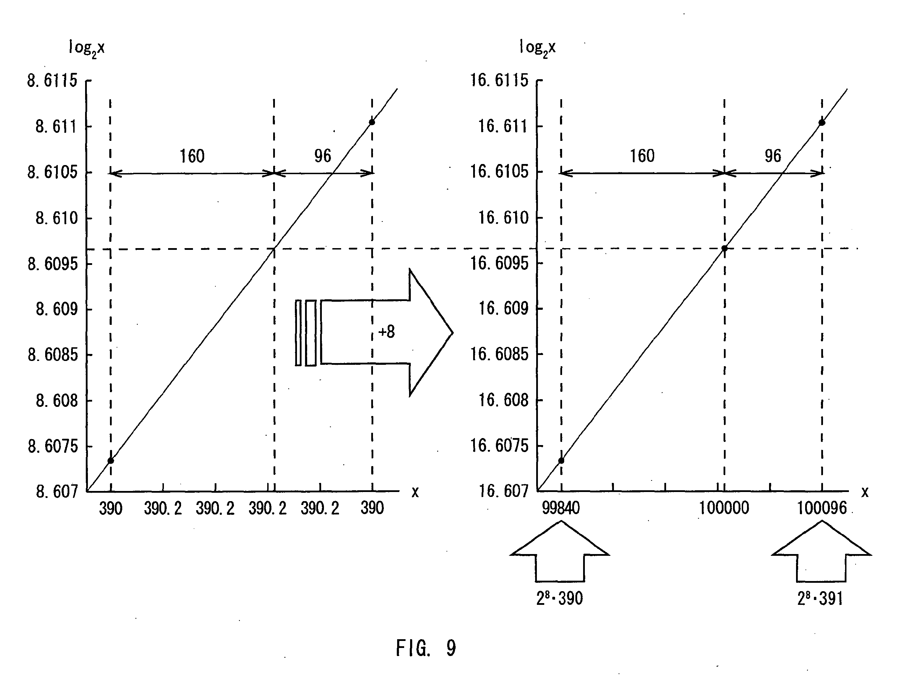

When $2^8$ is taken out from $\log_2 (2^8 \cdot 390)$ and $\log_2 (2^8 \cdot 391)$, it is possible to obtain the value after internally dividing 256 to a ratio of 160 : 96 as shown at the left side of FIG. 9 by regarding both $\log_2 (390)$ and $\log_2 (391)$ to be similar. Then, the logarithmic value of $\log_2 100,000$ can be obtained by adding $8(\log_2 2^8)$ to the above value.

Therefore, the image entropy computing section 25 can approximately compute $\log_2 100,000$ in a simple manner within a short period of time only when it holds a logarithmic table containing the logarithmic values of $\log_2 390$ and $\log_2 391$ even if it does not hold the logarithmic values of $\log_2 1$ through $\log_2 100,000$ as a logarithmic table.

Actually, as for the formula (5), when integers y and r for expressing X by formula (9) shown below is provided

$$x = 2^{\alpha} \cdot y + r \qquad\qquad \cdots\cdots (9)$$

$\log_2 x$, or the logarithm with a base of 2 for an arbitrarily selected integer x, can be expressed by formula (10) shown below.

$$\log_2 X \doteqdot \log_2 2^{\alpha} + \frac{(2^{\alpha} - r) \cdot \log_2 y + r \cdot \log_2 (y+1)}{2^{\alpha}},$$

$$\doteqdot \alpha + \frac{(2^{\alpha} - r) \cdot \log_2 y + r \cdot \log_2 (y+1)}{2^{\alpha}} \qquad \cdots\cdots (10)$$

In short, the above formula says that $\alpha$ is added to the value of $\log_2 x$ when the difference between $\log_2 y$ and $\log_2 (y + 1)$ is internally divided to a ratio of $r : 2^{\alpha} - r$. Thus, it is possible to accurately determine the value of $\log_2 x$ in a short period of time.

(1-3-2) Results of verification

Now, the results of an experiment for the accuracy of logarithmic value and the speed of approximate computations using the above-described technique of raising the logarithmic computation speed will be described below.

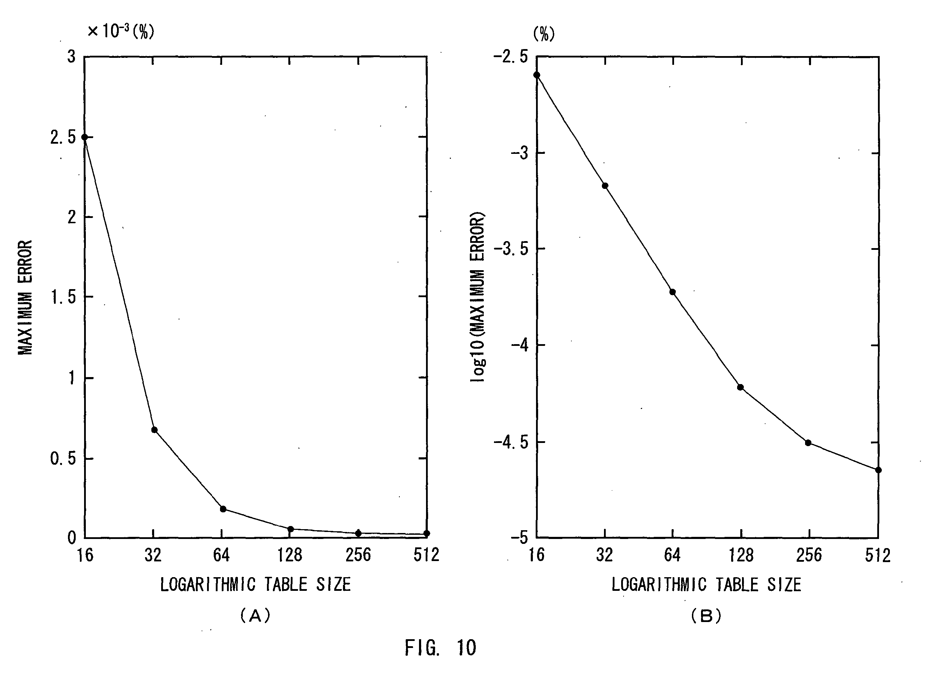

When the size of the logarithmic table that the image entropy computing section 25 holds is made to vary from 16 to 512, the image entropy computing section 25 computes the logarithmic values of $\log_2 x$ from x = 1 to x = 100,000. The maximum errors are shown in FIGS. 10(A) and 10(B).

The expression of the size of the logarithmic table means the richness of logarithmic values from $\log_2 1$ to $\log_2 n$ (n = x). For example, when the logarithmic values from $\log_2 1$ to $\log_2 16$ are held in the form of a logarithmic table, the size of the logarithmic table is expressed as "16". Similarly, when the logarithmic values from $\log_2 1$ to $\log_2 512$ are held in the form of a logarithmic table, the size of the logarithmic table is expressed as "512".

As shown in FIG. 10(A), with approximate computations of the image entropy computing section 25 using a logarithmic table of a size of "512", the accuracy of logarithmic values rises as the size of the logarithmic table is increased and the maximum error is suppressed to 0.0023%.

In this case, while the maximum error seems to be converged to 0.0023% from the size of the logarithmic table of "128" to the size of the logarithmic table of "512", it is actually not converged. It will be seen from FIG. 10(B) where the vertical axis is made to indicate $\log_{10}$ (maximum error) that the maximum error keeps on decreasing even the size of the logarithmic table exceeds "512" after passing "128".

(1-3-3) Logarithmic computation process sequence

Now, the logarithmic computation process sequence providing basic concept and the logarithmic computation process sequence to be followed when the embodiment is mounted in a portable communication terminal or the like will be specifically described bellow.

(1-3-3-1) Logarithmic computation process sequence providing a basic concept

The image entropy computing section 25 starts with the starting step of routine RT3 and then proceeds to the next step, or Step SP31 where it determines if $\log_2 x$ for determining logarithmic values is found in the logarithmic table or not. If the answer to the question is negative, the image entropy computing section 25 moves to Step SP32 of the next logarithmic table referring routine SRT1.

In Step SP32, the image entropy computing section 25 determines the logarithmic value of $\log_2 x$ with ease within a short period of time by reading the logarithmic value of $\log_2 x$ from the corresponding table that is the subject of reference and the moves to the next step, or Step SP35, where it ends the process.

If, on the other hand, the answer to the question is positive in Step SP31, it means that the $\log_2 x$ to be determined is not found in the logarithmic table and it is necessary to determine an approximate value by approximate computations, using the logarithmic values on the logarithmic table. Then, the image entropy computing section 25 needs to move to Step SP33 of the next approximate computation routine SRT2.

In Step SP33, the image entropy computing section 25 determines the exponent ($\alpha$) of 2 according to the formula (9) expressing "x" of $\log_2 x$ and then moves to the next step, or Step SP34.

In Step SP34, the image entropy computing section 25 determines the point of internal division when the difference between $\log_2 y$ and $\log_2 (y + 1)$ is internally divided to a ratio of r: $2^\alpha$ - r by means of the above formula (10). Then, it determines the logarithmic value corresponding to the point of internal division by approximate computations, using the logarithmic table and subsequently moves to the next step, or Step SP35.

(1-3-3-2) Specific logarithmic computation process sequence

As pointed out above, it is desirable for the authentication apparatus 1 to execute an integer calculation process, maintaining a high accuracy level, with a reduced load, in view of a situation of being mounted in a portable apparatus.

Therefore, the image entropy computing section 25 is adapted to prepare and hold an exponentially multiplied logarithmic table by multiplying the logarithmic values of the logarithmic table by an integer (preferably obtained by exponential multiplication of 2, or $C = 2^{coef}$ times), rounding the products to the nearest integers and expressing them by binary numbers.

On the above assumption, the image entropy computing section 25 starts with the starting step of routine RT4 and then moves to the next step, or Step SP41, where it determines if $\log_2 x$, the value of which it is to determine, is found in the exponentially multiplied logarithmic table or not. If the answer to the question is negative, it moves to Step SP42 of the next logarithmic table referring routine SRT3.

In Step SP42, the image entropy computing section 25 reads out the logarithmic value of $\log_2 x$ from the exponentially multiplied logarithmic table to determine the logarithmic value of $\log_2 x$ with ease in a short period of time and converts it into the proper logarithmic value by shifting to the left by the number of bits corresponding to the exponential multiplication. Then, it moves to the next step, or Step SP45 to end the process.

If, on the other hand, the answer to the question is positive, it means that the value of $\log_2 x$ it is to determine is not found in the exponentially multiplied logarithmic table and it is necessary to determine an approximate value by approximate computations, using the logarithmic values on the exponentially multiplied logarithmic table. Then, the image entropy computing section 25 needs to move to Step SP43 of the next approximate computation routine SRT4.

In Step SP43, the image entropy computing section 25 determines the exponent ($\alpha$) of 2 according to the formula (9) expressing "x" of $\log_2 x$ and then moves:to the next step, or Step SP44.

In Step SP44, the image entropy computing section 25 determines the point of internal division when the difference between $\log_2 y$ and $\log_2 (y + 1)$ is internally divided to a ratio of r: $2^\alpha$ - r by means of the above formula (10). Then, it determines the logarithmic value corresponding to the point of internal division by approximate computations, using the exponentially multiplied logarithmic table, and subsequently converts it into the proper logarithmic value by shifting to the left by the number of bits corresponding to the exponential multiplication before it moves to the next step, or Step SP45, to end the process.

(1-3-4) Results obtained for logarithmic computation speed

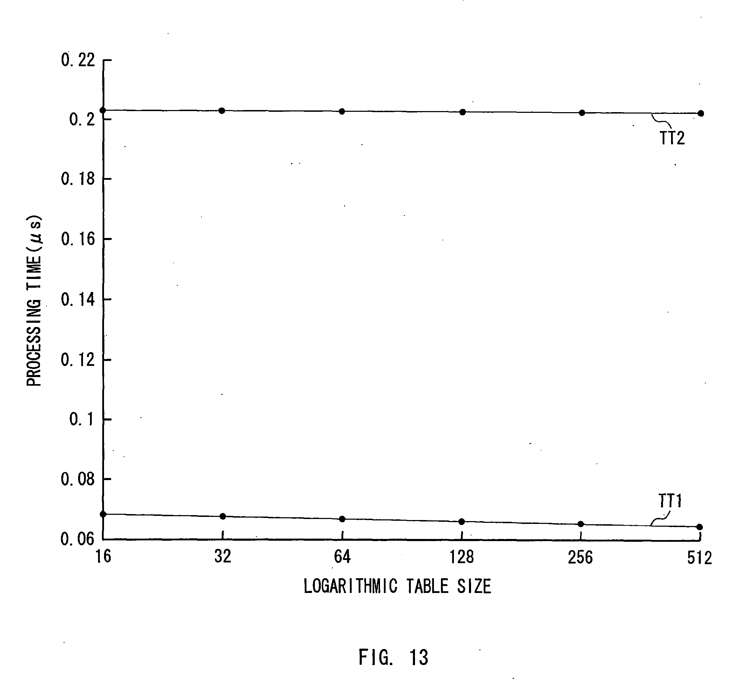

FIG. 13 illustrates some of the results obtained by comparing the processing time TT1 of logarithmic computations by way of the above-described logarithmic computation process sequence RT4 that corresponds to the size of the logarithmic table and the processing time TT2 of decimal point computations of a personal computer as herebefore, using a predetermined logarithmic computation processing program.

The processing time TT1 is determined by carrying out logarithmic computations 100 times for $\log_2 x$ from x = 1 to 100,000 by way of the specific logarithmic computation process sequence RT4, changing the size of the logarithmic table, and plotting the observed logarithmic computation process time of each logarithmic computation cycle. On the other hand, the processing time TT2 is determined by carrying out logarithmic computations 100 times for $\log_2 x$ from x = 1 to 100,000 by way of a predetermined logarithmic computation processing program, changing the size of logarithmic table, and plotting the observed logarithmic computation process time of each logarithmic computation cycle.

As clear from the results of comparison, the processing time TT1 of carrying out logarithmic computations by way of the specific logarithmic computation process sequence RT4 that varies as a function of the size of the logarithmic table, is remarkably shorter than the processing time TT2 of carrying out decimal point computations of a personal computer as herebefore by way of a predetermined logarithmic computation program. When the size of the logarithmic table is large, the speed of the former computations is about three times as high as the speed of the latter computations, while the maximum error of the former computations is suppressed to about 0.0023% to achieve a high accuracy level (FIG. 5).

(1-3-5) Image entropy error

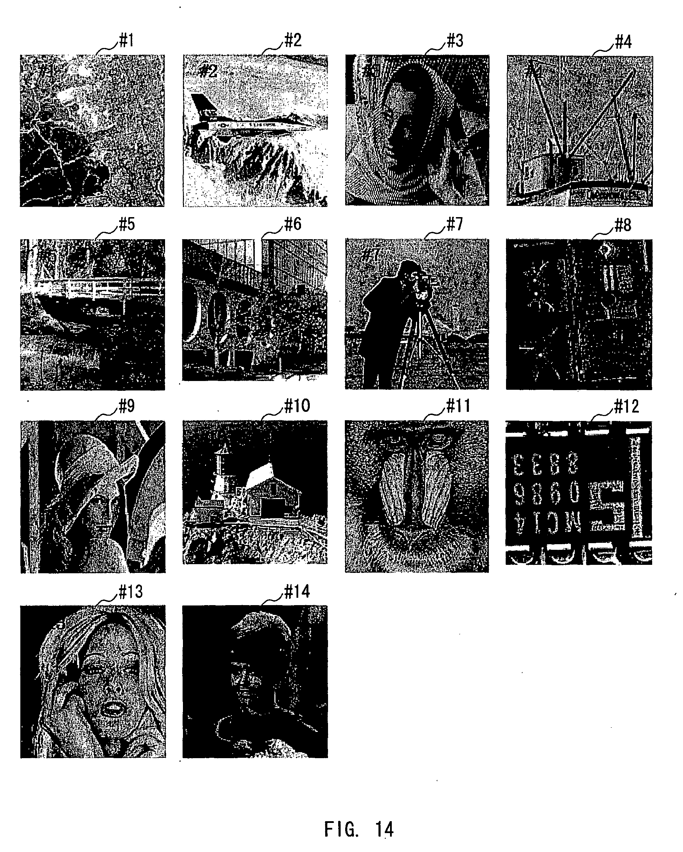

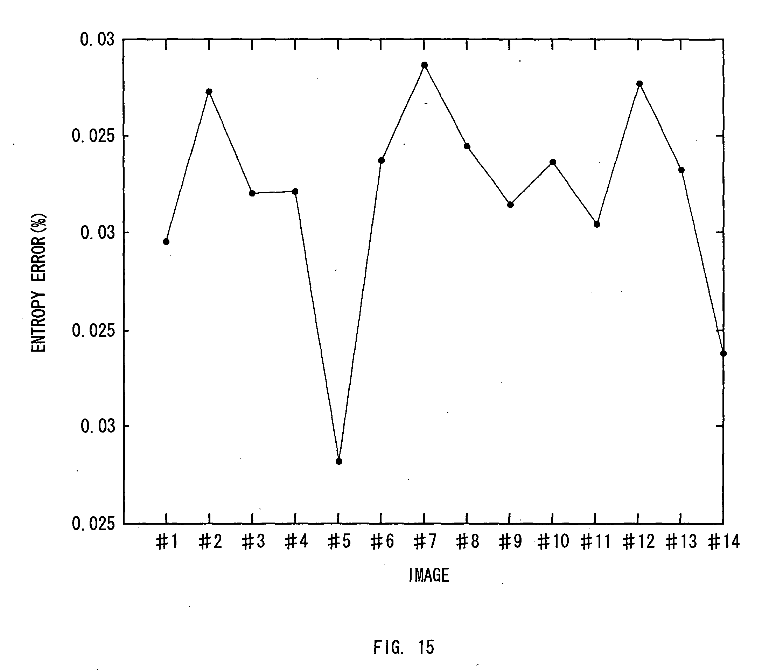

Finally, the image entropy of each of a plurality of standard images (#1 through #14) as shown in FIG. 14 was computed by way of the above-described specific logarithmic computation process sequence RT4. FIG. 15 shows the entropy errors.

It will be seen from FIG. 15 that the entropy errors of #2, #7 and some other standard images are large, whereas the entropy error of #5 standard image is small.

The reason for this difference may be that #2, 7 and some other standard images show a high probability of occurrence of luminance values of mountains, air and flat areas that take a large part in the image and that the results of computations may include errors attributable to approximate computations using the above-described formula (10).

On the other hand, while areas of various different luminance values are dispersed in #5 standard image, the results of computations may not include large errors attributable to approximate computations using the above-described formula (10). In other words, the values of $\log_2 x$ for various luminance values may be found in the logarithmic values listed in the logarithmic table.

However, while the entropy error is large for #2, #7 and some other standard images, it is still not larger than 0.03%, which is within a tolerable range of error, although the logarithmic values were obtained by approximate computations.

In other words, decimal point computations are not involved in the image entropy computing section 25 and hence the process load is small. Additionally, the image entropy computing section 25 does not require a large memory capacity necessary for an application program for carrying out decimal point computations so that it can highly precisely carry out logarithmic computations within a short period of time.

Therefore, when the authentication apparatus 1 is mounted in a portable apparatus, it can highly accurately execute an authentication process with a sufficiently short computing time to remarkably improve the convenience of use thereof.

(1-4) Operations and advantages of first embodiment

With the above-described arrangement, the authentication apparatus 1 utilizes that the luminance distribution of the video signal S2 obtained by shooting one of the fingers of a to-be-registered person can be expressed by image entropy $H_{img}$ and uses the image entropy $H_{img}$ as template entropy $T_H$ so as to register the person in advance by storing a set of registered person identification template data $T_{fv}$ prepared by pairing the template entropy $T_H$ and template video data S3 representing a blood vessels pattern image of the finger in a flash memory 13 in a blood vessels registration mode.

Thus, the authentication apparatus 1 executes an authentication process in the first stage from the entropy point of view by determining if the absolute value of the difference of the template entropy $T_H$ of the registered person identification template data $T_{fv}$ and the image entropy $H_{img}$ of the to-be-authenticated person is smaller than predetermined permissible error $\Delta H$ or not and then it executes a pattern matching process, using the template video data S3 of the registered person identification template data $T_{fv}$ and the blood vessels pattern image of the to-be-authenticated person, only when the difference is smaller than the predetermined permissible error $\Delta H$.

Therefore, the authentication apparatus 1 can highly accurately determine if the to-be-authenticated person agrees with the corresponding registered person or not by determining it in two stages including a stage of determining from the entropy point of view and a stage of determining from the pattern matching point of view.

Particularly, because the authentication apparatus 1 is adapted to execute an authentication process from the entropy point of view, using the template entropy $T_H$, and, if the template video data S3 is stolen and a fraudulent user who does not possess the finger of the original image and tries to prepare a pseudo-finger, it can effectively baffle the attempt. Thus, the authentication apparatus 1 can effectively eliminate any sham and highly probably prevent any erroneous authentication from taking place by executing an authentication process not only from the pattern matching point of view but also from the entropy point of view.

Additionally, the authentication apparatus 1 is only required to add the value of the image entropy $H_{img}$ to the template video data S3 as temperature entropy $T_H$, it can efficiently eliminate any sham with a quantity of information remarkably smaller than the arrangement of holding the luminance distribution of the video data S2 of the finger in the form of a histogram. Meanwhile, since the authentication apparatus 1 is based on the concept of information entropy for authentication processes, if the overall lightness is differentiated between the video data S2 and the video data S20 because the image shooting condition is differentiated between the time when the video data S2 is generated and the time when the video data S20 is generated, the value of the image entropy $H_{img}$ is not affected. Thus, the authentication apparatus 1 is free from any error determination due to the difference of image shooting condition, if any, between the blood vessels registration mode and the authentication mode.

Additionally, the computed value of the image entropy $H_{img}$ for the extracted finger region images S4, S2 of the unmasked region and the computed value of the image entropy $H_{img}$ for the unmasked finger image S2 are substantially equal to each other, it is only necessary for the authentication apparatus 1 to computationally determine the image entropy $H_{img}$ of the extracted finger region image S4 of a finger region that is included in the video data S2 obtained as a result of shooting the finger. Thus, the quantity of computations for unnecessary regions other than the finger region is reduced and hence the time required for an authentication process to be executed from the entropy point of view can be reduced.

In this way, the authentication apparatus 1 is only required to computationally determine the image entropy $H_{img}$ for the extracted finger region images S4, S22. Therefore, if there is any unclear image area other than the finger region, the area may well be simply masked. Then, it is possible to alleviate the requirements to be met when shooting one of the fingers of a to-be-authenticated person and hence improve the convenience on the part of the user in an authentication process.

Thus, with the above-described arrangement, the authentication apparatus 1 is adapted to execute an authentication process using information entropy in addition to an authentication process for template matching as herebefore. Thus, it is possible to highly probably prevent an authentication error from taking place due to a sham by means of a simple arrangement.

(2) Second embodiment

(2-1) Basic principle of second embodiment

The basic principle of the second embodiment will be described here first.

(2-1-1) Exclusive control using weighted image entropy

The second embodiment provides a technique for eliminating any fraudulent registration using a sham image of a non-biological pseudo-finger in initial stages and also reliably eliminating a sham using a pseudo-finger when the authentication utilizes a characteristic quantity of the image.

More specifically, a weighting process that varies as a function of the distribution of pixel values is executed in this embodiment on the image entropy $H_{img}$ of the image that is used to extract characteristic values for the blood vessels pattern image of finger veins to generate weighted image entropy $H_{imgw}$ (which will be described in greater detail hereinafter) in order to make it possible to eliminate registration of a sham image of a non-living body and an authentication error. Firstly, a weighted image entropy will be described here.

(2-1-2) Weighted image entropy

As described above, a weighted image entropy is an information entropy using luminance values of an image. If the probability of appearance of a pixel value is $P_i$, its self-adjoint information can be expressed as $-\log_2 p_i$, which is the total sum of the expected values $-p_i \log_2 p_i$ of the self-adjoint information. In other words, image entropy $H_{img}$ is defined by the formula (1) which is described earlier.

If the image has 256 tones of pixel value 1 (1 = 0, ..., 255) in terms of an 8-bit grey scale, the image entropy $H_{img}$ can be expressed by the formula (2) which is also described earlier.

A weight WL that varies as a function of the distribution of pixel values representing the luminance of the image is provided. The weighted image entropy $H_{imgw}$ using the weight WL is expressed by formula (11) shown below.

$$H_{imgw} = -\sum_{L=0}^{255} w_L p_L \log_2 p_L \qquad \cdots\cdots \ (11)$$

If the image has a width of $S_W$, a height of $S_H$, a total pixel number of $N = S_W \times S_H$ and the number of pixels of pixel value L is $n_L$, the probability of appearance $p_i$ of the pixel value L is expressed by the formula (3) which is also described earlier.

Therefore, by using the formula (3), the weighted image entropy $H_{imgw}$ is expressed by formula (12) shown below.

$$
\begin{aligned}
H_{imgw} &= -\sum_{L=0}^{255} w_L p_L \log_2 p_L \\
&= -\sum_{L=0}^{255} w_L \frac{n_L}{N} \log_2 \left( \frac{n_L}{N} \right) \\
&= -\frac{1}{N} \sum_{L=0}^{255} w_L n_L \left( \log_2 n_L - \log_2 N \right) \\
&= \frac{1}{N} \sum_{L=0}^{255} w_L n_L \log_2 N - \frac{1}{N} \sum_{L=0}^{255} w_L n_L \log_2 n_L \\
&= \frac{\log_2 N}{N} \sum_{L=0}^{255} w_L n_L - \frac{1}{N} \sum_{L=0}^{255} w_L n_L \log_2 n_L \qquad \cdots\cdots \ (12)
\end{aligned}
$$

Since the pixel value $n_L$ is a positive value, it is possible to instantaneously obtain the weighted image entropy $H_{imgw}$ in a processing system that is not adapted to high speed processing and logarithmic processing simply by having a table of $\log_2 n_L$.

(2-1-3) Weighting by means of distribution of pixel values

Now, how the weight WL is determined as a function of the distribution of pixel values that represents the luminance of an image will be described below.

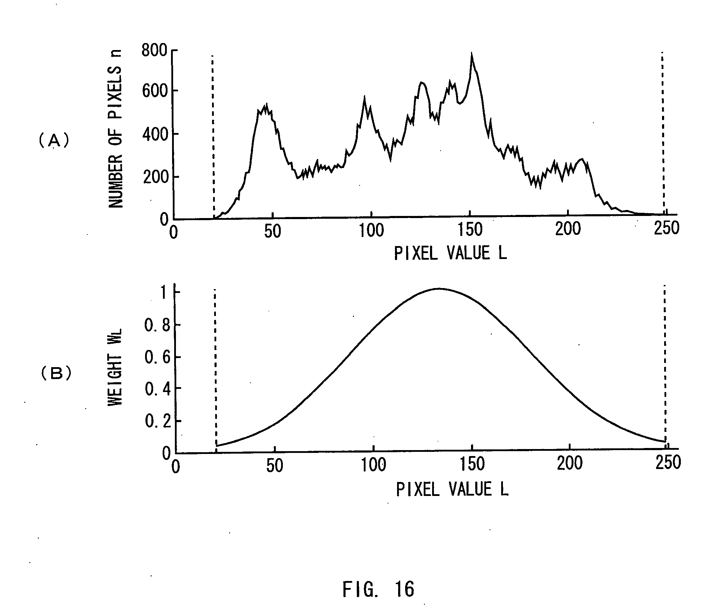

In the case where an image showing a pixel value histogram as illustrated in FIG. 16(A), the pixel value histogram is weighted by weight WL showing a normal distribution pattern as illustrated in FIG. 16(B) in order to correct the distribution of pixel values in such a way that it shows the maximum value (which is equal to "1" in this case) at the center thereof.

Then, as a matter of course, the value of the image entropy $H_{img}$ computationally determined on the basis of the pixel value histogram as shown in FIG. 16(A) and the value of the weighted image entropy $H_{imgw}$ computationally determined on the basis of the pixel value histogram (not shown) that is obtained by way of a weighting process using weight WL as shown in FIG. 16(B).

(2-1-4) Identification of a living body or a non-living body

The above-described technique is employed for personal authentication using a blood vessels pattern. For example, the video data obtained by shooting a pseudo-finger made of rubber and held stationary for a predetermined period of time by means of a camera and the video data obtained by shooting three fingers of three different persons held stationary for a predetermined period of time by means of a camera are prepared and the image entropy of each of the video data is computationally determined after a masking process.

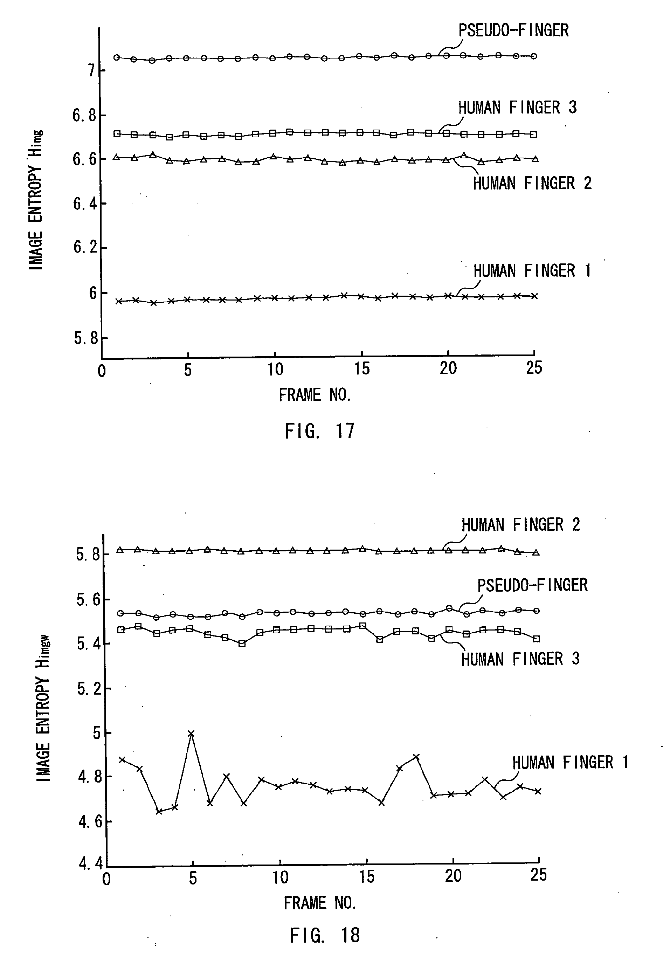

More specifically, rubber-made pseudo-finger, human finger 1, human finger 2 and human finger 3 are placed at a predetermined position in the authentication apparatus and held stationary for a predetermined period of time. FIGS. 17 and 18 show the change in the image entropy from frame to frame as observed for the above fingers. FIG. 17 shows the change when no weight WL is used, whereas FIG. 18 shows the change when the weight WL as shown in FIG. 16(B) is used.

As seen from the graph of showing the change in the image entropy when no weight WL is used (FIG. 17), the value of image entropy does not practically change from frame to frame. On the other hand, the value of the image entropy of the human finger 1 and that of the image entropy of the human finger 3 change significantly when weight WL is used. Thus, it will be seen that each person can be identified to a certain extent by means of image entropy.

As for the human finger 2 and the pseudo-finger, the value of the image entropy does not change significantly from frame to frame as in the case of the image entropy when no weight WL is used. The reason for this seems to be that the distribution profile of the pixel value histogram and the distribution profile of the weight WL resemble very much to each other.

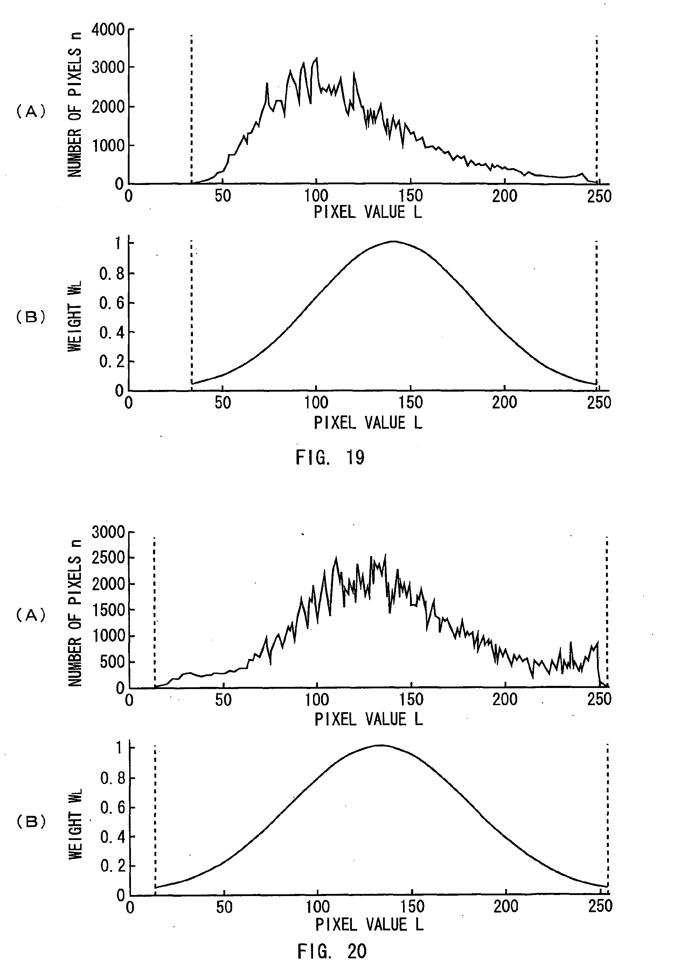

The peak position that represents the distribution profile of the pixel value histogram and the peak position of the distribution profile of the weight WL are shifted from each other for the human finger 1 as shown in FIGS. 19(A) and 19(B). To the contrary, the peak position that represents the distribution profile of the pixel value histogram and the peak position of the distribution profile of the weight WL are very close to each other and hence the two distribution profiles resembles each other very much for the human finger 2 as shown in FIGS. 20(A) and 20(B).

Thus, since the peak position that represents the distribution profile of the pixel value histogram and the peak position of the distribution profile of the weight WL are shifted from each other for the human finger 1, the expected value of influence of the self-adjoint information of the pixel values that is probabilistically very rare is increased to make the image entropy tend to be unstable.

On the other hand, since the peak position that represents the distribution profile of the pixel value histogram and the peak position of the distribution profile of the weight WL are very close to each other and hence the two distribution profiles resemble each other very much for the human finger 2, the expected value of the influence of the self-adjoint information of the pixel values that is probabilistically very rare is decreased to make the image entropy stable.

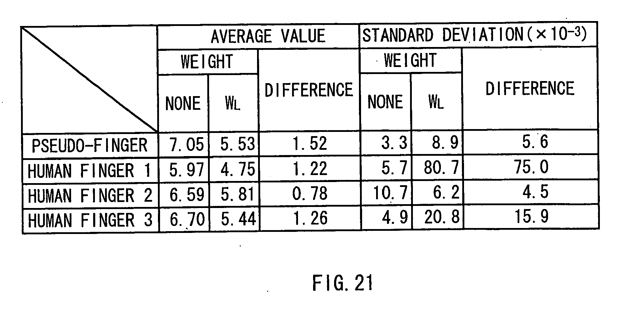

FIG. 21 is a table schematically illustrating the average values and the standard deviations of image entropies for the pseudo-finger, the human finger 1, the human finger 2 and the human finger 3 between weighted and non-weighted. The difference of the average values of image entropies indicates the difference between the distribution profile of the weight WL and the distribution profile of the pixel value histogram, whereas the difference of the standard deviations indicates the degree of instability of the pixel value histogram.

Thus, the difference of the average values of image entropies is medium for the human finger 1 and the human finger 3 so that it is predicable that the probability of appearance of any pixel value remote from the center of distribution of the weight WL is instable for the pixel value histograms thereof. This is natural and a matter of course in a sense because of the existence of flowing blood in a living body.

The difference of the average values of image entropies is relatively small and hence the pixel value histogram shows a distribution profile that resembles the distribution profile of the weight WL in addition to that the difference of the standard deviations of image entropies is small for the human finger 2 so that it is predictable that the probability of appearance of any pixel value near the center of distribution of the weight WL. The above fact suggests that veins are shot very clearly by a camera.

On the other hand, since the difference of the average values of image entropies is relatively large for the pseudo-finger, the probability of appearance of any pixel value remote from the center of distribution of the weight WL is high in addition to that the difference of the standard deviations of image entropies is small. Thus, it will be seen that the probability of appearance of all possible pixel values are stable. This fact suggests that the image is very unnatural if it is obtained by shooting a living body.

Since the difference of the standard deviations of image entropies is relatively small for both the human finger 2 and the pseudo-finger, it is necessary to make it possible to clearly discriminate the human finger 2 and the pseudo-finger. In view of that the distribution profile of the weight WL resembles to the distribution profile of the pixel value histogram for the human finger 2 and hence the standard deviation of image entropies is stable, a case where weight WL2 whose distribution profile is different from the distribution profile of the weight WL (FIG. 16(B)) is used is looked into.

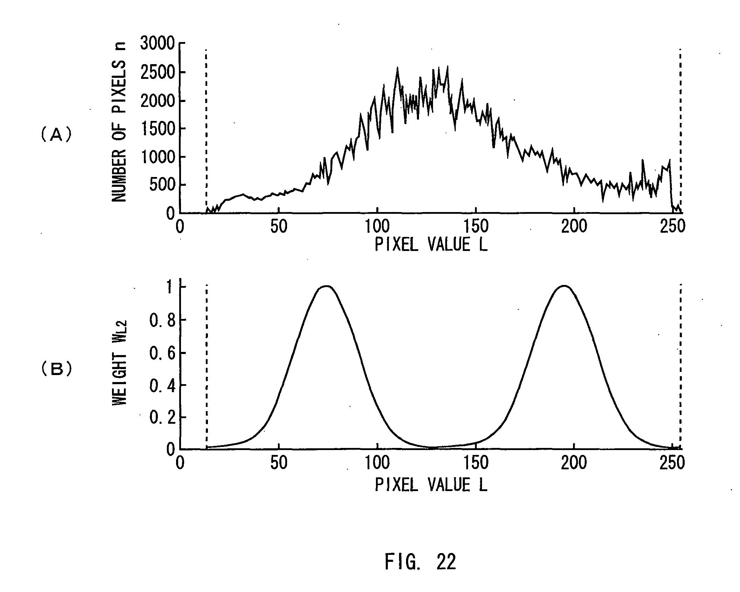

The pixel value histogram of a continuous image of the human finger 2 illustrated in FIG. 22(A) is taken and weight WL2 showing a distribution profile as illustrated in FIG. 22(B) is used for the pixel value histogram to look into the change in the image entropy of the continuous image of the human finger 2 as in the case where the weight WL is used.

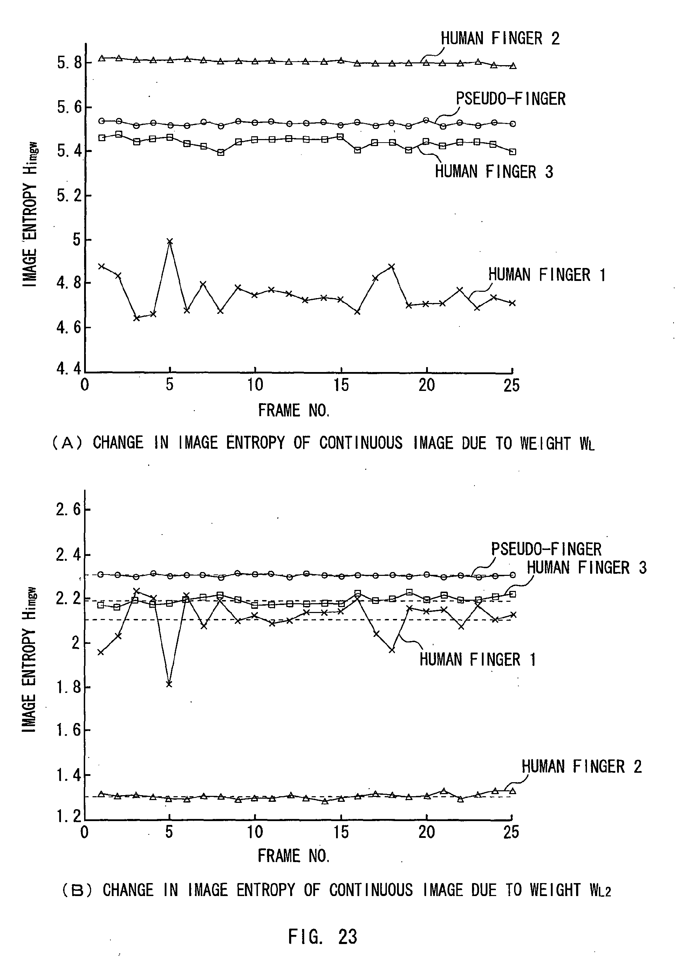

FIG. 23(A) illustrates the change in the image entropy of the continuous image weighted by the weight WL described above by referring to FIGS. 10(A) and 10(B) for the pseudo-finger and the human fingers 1, 2 and 3, whereas FIG. 23(B) illustrates the change in the image entropy of the continuous image weighted by the weight WL2 for the above fingers.

From the change in the image entropy (standard deviation) of the continuous image weighted by the weight WL2 as illustrated in FIG. 23(B), it will be seen that the image entropy is instable for both the human finger 1 and the human finger 3.

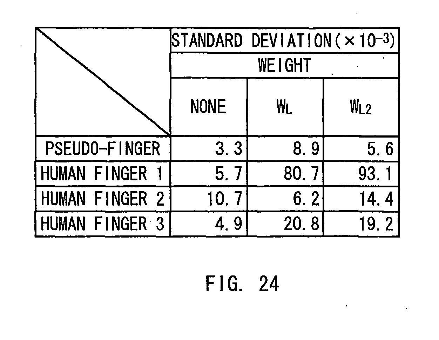

FIG. 24 shows the results obtained by comparing the change in the image entropy of the continuous image without weight (FIG. 17), the change in the image entropy of the continuous image weighted by the weight WL (FIG. 23(A)) and the change in the image entropy of the continuous image weighted by the weight WL2 (FIG. 23(B)) for the above fingers.

The standard deviation of image entropies of the continuous image weighted by the weight WL2 shows changes for the human finger 2. The reason for this is that the distribution profile of the weight WL2 (FIG. 22(B)) does not resemble the distribution profile of the pixel value histogram of the human finger 2 so that the expected value of the self-adjoint information of a pixel that is very rare as pixel value is weighted further and the pixel itself does not appear stably in the continuous image.

As for the pseudo-finger on the other hand, both the standard deviation of image entropies of the continuous image weighted by the weight WL and the standard deviation of image entropies of the continuous image weighted by the weight WL2 are small and the change in the image entropy (standard deviation) of the continuous image is stable even when the weight WL2 is used.

Thus, by checking the change in the image entropy (standard deviation) of a continuous image, using the weight WL and the weight WL2 showing respective distribution profiles of a characteristic that are different from each other, it is possible to clearly discriminate a living body and a non-living body because, as described above, the change in the image entropy (standard deviation) of a continuous image is small in any case for the pseudo-finger, whereas the change in the image entropy (standard deviation) of a continuous image is large in any case for the human fingers 1 through 3.

(2-2) Authentication apparatus of second embodiment

As described above, an authentication apparatus of the second embodiment, which discriminates a living body and a non-living body or a non-living body and executes an authentication process, will be described below.

(2-2-1) Circuit configuration of authentication apparatus of second embodiment

The authentication apparatus 100 of the second embodiment has a circuit configuration same as the authentication apparatus 1 of the first embodiment except that the control section 10 of the first embodiment is replaced by a control section 110 as shown in FIG. 4 and hence the circuit configuration of the second embodiment will not be described here any further.

In the authentication apparatus 100 of the second embodiment, again, the control section 110 is adapted to receive the execution command COM1 for operating in a blood vessels registration mode for registering blood vessels of a to-be-registered user and the execution command COM2 for operating in an authentication mode for determining the authenticity of the registered person in response to an operation of the operation section 11 by the user.

Upon receiving the execution command COM1 or COM2, the control section 110 determines the mode of execution according to the execution COM1 or COM2, whichever appropriate, and appropriately controls the blood vessels shooting section 12, the flash memory 13, the external interface 14 and the notification section 15 to execute an operation in the blood vessels registration mode or the authentication mode, whichever appropriate, according to the application program that corresponds to the result of determination.

(2-2-2) Blood vessels registration mode

If it is decided to select the blood vessels registration mode for the mode of operation, the control section 110 of the authentication apparatus 100 goes into the blood vessels registration mode and controls the blood vessels shooting section 12 to execute a registration process.

Then, the drive control section 12a of the blood vessels shooting section 12 controls the operation of driving one or more near-infrared light sources LS for irradiating near infrared rays onto the finger of the to-be-registered person placed at a predetermined position of the authentication apparatus 1 and image pickup element ID of camera CM, which may typically be a CCD.

As a result, the near infrared rays irradiated onto the finger of the to-be-registered person passes the inside of the finger, although some of them are reflected and scattered, and enters the image pickup element ID of the blood vessels shooting section 12 as blood vessels projecting rays by way of the optical system OP and diaphragm DH. The image pickup element ID performs an operation of photoelectric conversion of the blood vessels projecting rays and then outputs the outcome of the photoelectric conversion to the drive control section 12a as video signal S1.

Note that the image of the video signal S1 output from the image pickup element ID includes not only the blood vessels in the inside of the finger but also the profile and the finger print of the finger because the near infrared rays irradiated onto the finger are reflected by the surface of the finger before they enter the image pickup element ID.

The drive control section 12a of the blood vessels shooting section 12 adjusts the lens positions of the optical lenses of the optical system OP so as to bring the blood vessels in the inside of the finger into focus and also the aperture value of the diaphragm DH of the optical system so as to make the quantity of incident light entering the image pickup element ID show an appropriate level and, after the adjustment, supplies the video signal S2 output from the image pickup element ID to the control section 110.

The control section 110 executes a predetermined video process on the video signal S2 to generate a blood vessels pattern image of a blood vessels pattern extracted to show the characteristics of the blood vessels of the finger and, at the same time, computationally determines the image entropy $H_{img}$ according to the blood vessels pattern image. Then, the control section 110 identifies the blood vessels pattern as that of a living body or that of a non-living body on the basis of the change in the entropy (standard deviation) of a continuous image obtained by weighting the image entropy $H_{img}$ in two different ways using weight WL and weight WL2. If the control section 110 recognizes that the blood vessels pattern is that of a living body, it generates registered person identification template data $T_{fv}$ by combining the blood vessels pattern image and the image entropy $H_{img}$ and stores it in the flash memory 13 to end the registration process.

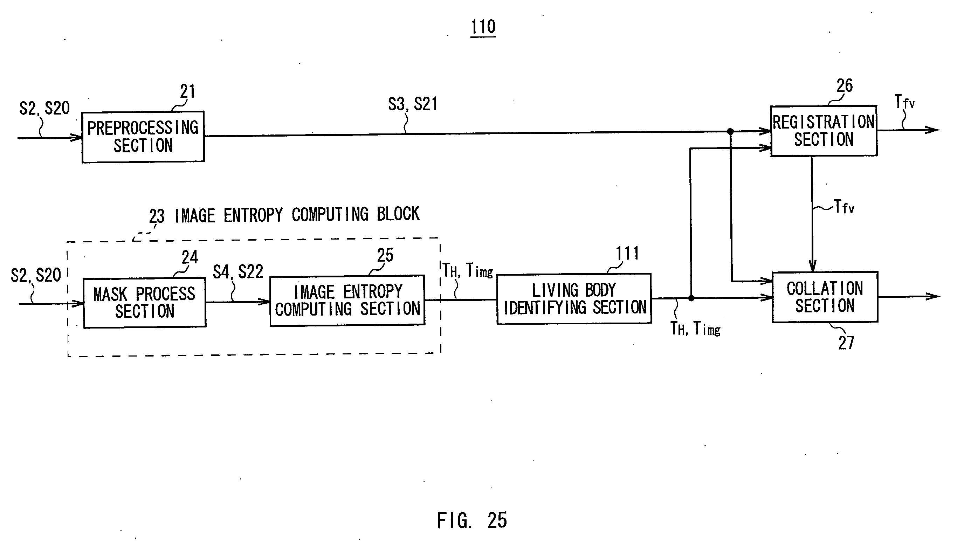

Now, the video process that the control section 110 executes will be described in greater detail below. Referring to FIG. 25, the control section 110 has a preprocessing section 21, an image entropy computing block 23, a registration section 26, a living body identifying section 111 and a collation section 27 as functional components and inputs the video signal S2 supplied from the blood vessels shooting section 12 to the preprocessing section 21 and also to the mask process section 24 of the image entropy computing block 23.

The preprocessing section 21 sequentially executes an analog/digital conversion process, a predetermined contour extracting process including a Sobel filter process, a predetermined smoothing process including a Gaussian filter process, a binarization process and a line narrowing process and then sends out the template video data S3 representing the blood vessels pattern obtained as a result of the above processes to the registration section 26.

The mask process section 24 of the image entropy computing block 23 generates a masked image (see FIGS. 2(A1) through 2(D3)) for extracting only a finger region where the blood vessels pattern is shown according to the video signal 2 supplied from the blood vessels shooting section 12 and generates an extracted finger region image S4 by applying the masked image. Then, the mask process section 24 sends out the extracted finger region image S4 to the image entropy computing section 25.

The image entropy computing section 25 computationally determines the image entropy $H_{img}$ by means of the above-described formula (4) on the basis of the extracted finger region image S4 and sends it out to the living body identifying section 111 as template entropy $T_H$ that is an element for constituting registered person identification template data $T_{fv}$. In this case again, it is possible to use the technique of raising the logarithmic computation speed at the image entropy computing section 25 described above under (1-3).

When the living body identifying section 111 determines that the template entropy $T_H$ shows a value of a non-living body in a manner as described above under (2-1-4) identification of a living body or a non-living body, it stops sending the template entropy $T_H$ to the registration section 26 and suspends the registration process. In other words, the level body identifying, section 111 sends the template entropy $T_H$ to the registration section 26 only when it determines that the template entropy $T_H$ shows a value of a living body (human being).

The registration section 26 generates registered person identification template data $T_{fv}$ by pairing the temperature video data S3 representing the blood vessels pattern image supplied from the preprocessing section 21 and the template entropy $T_H$ supplied from the living body identifying section 111 and stores it in flash memory 13 to end the registration process.

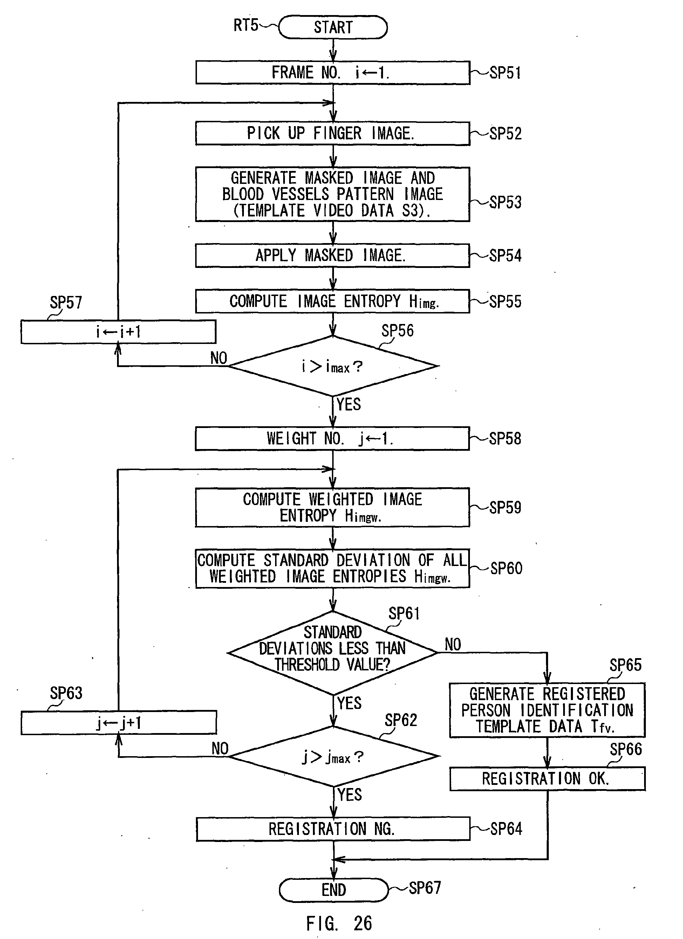

The control section 10 of the authentication apparatus 1 operates in the blood vessels registration mode in the above-described manner. Now, the blood vessels registration process sequence that is executed in the blood vessels registration mode will be described below by referring to FIG. 26.

The control section 110 of the authentication apparatus 100 starts with the starting step of routine RT5 and proceeds to the next step, or Step SP51, where it sets initial value "1" for the frame number "i" in order to pick up a continuous image of the finger of the to-be-registered person before it moves to the next step, or Step SP52.

In Step SP52, the control section 110 generates a video signal S2 by shooting the user's finger by means of the blood vessels shooting section 12 and sends it out to the preprocessing section 21 of the control section 10 and also to the mask process section 24 of the image entropy computing section 23 before it moves to the next step, or Step SP53.

In Step SP53, the control section 110 generates a masked image for extracting only the finger region where the blood vessels pattern is shown according to the video signal S2 supplied from the blood vessels shooting section 12 by means of the mask process section 24 and also a template video data S3 representing the blood vessels pattern image by means of the preprocessing section 21 and then moves to the next step, or Step SP54.

In Step SP54, the control section 110 generates extracted finger region image S4 by applying the masked image generated in Step SP53 to the video signal S2 supplied from the blood vessels shooting section 12 and then moves to the next step, or Step SP55.

In Step SP55, the control section 110 computationally determines the image entropy $H_{img}$ on the basis of the extracted finger region image S4 and holds it as template entropy $T_H$ before it moves to the next step, or Step SP56.

In Step SP56, the control section 110 determines if the frame number "i" exceeds the largest number of frame number necessary for generating a continuous image for the predetermined time period or not. If the answer to the question is negative, it means that the video signal S2 for the predetermined number of frames necessary for generating a continuous image of the finger for the predetermined time period has not been obtained by hooting the finger. Then, the control section 110 moves to the next step, or Step SP57.

In Step SP57, the control section 110 increments the count value for the frame number "i" by "1" and repeats the operations from Step SP52 on.

If, on the other hand, a positive answer is obtained to the question in Step SP56, it means that the video signal S2 for the predetermined number of frames necessary for generating a continuous image of the finger for the predetermined time period has been obtained by shooting the finger. Then, the control section 110 moves to the next step, or Step SP58.

In Step SP58, the control section 110 sets initial value "1" for weight number j in order to weight the image entropy $H_{img}$ computationally determined in Step SP55 with each of weights WL through WLj of various different types showing respective distribution profiles that are different from each other and then moves to the next step, or Step SP59.

In Step SP59, the control section 110 generates weighted image entropy $H_{imgw}$ by weighting the image entropy $H_{img}$ with the weight WL defined as weight number "1" and then moves to the next step, or Step SP60.

In Step SP60, the control section 110 determines the change in the entropy (standard deviation) for the weighted image entropy $H_{imgw}$ generated in Step SP59 and then moves to the next step, or Step SP61.

In Step SP61, the control section 110 determines if the standard deviation determined in Step SP60 is not greater than a predetermined threshold value ("10" is selected in this case because any pseudo-finger needs to be eliminated) or not.

If the answer to the question is positive, it means that the standard deviation of the weighted image entropy $H_{imgw}$ generated by using the weight WL that can be identified by the weight number is small and the finger can highly probably be a pseudo-finger. Then, the control section 110 moves to the next step, or Step SP62.

In Step SP62, the control section 110 determines if the weight number j exceeds the largest value that corresponds to all the types of weight WLn or not. If the answer to the question is negative, it means that the image entropy $H_{img}$ has not been weighted by each of all the weights WLn yet. Then, the control section 110 moves to the next step, or Step SP62.

In Step SP63, the control section 110 increments the count value for the weight number j by "1" and repeats the operations from Step SP59 on to weight the image entropy $H_{img}$ with each of all the weights WLn in order to determine if the standard deviation of each of the image entropies is not greater than the threshold value or not.

If the answer to the question in Step SP62 becomes positive, it means that the standard deviation of each of all the weighted image entropies $H_{imgw}$ obtained by using the weights WLn of all the different types is small and hence the finger is highly probably a pseudo-finger. Then, the control section 110 moves to the next step, or Step SP64.

In Step SP64, since the finger placed in the authentication apparatus 100 is highly probably a pseudo-finger, the control section 110 moves to the next step, or Step SP67, without continuing the registration process. Then, the control section 110 displays error message "the finger is not able to be registered".

If, on the other hand, the answer to the question in Step SP61 is negative, it means that the standard deviation of the weighted image entropy $H_{imgw}$ obtained by using a predetermined weight WLn exceeds the threshold value probably because of the blood flow of a living body and other factors and therefore the finger placed in the authentication apparatus 100 is highly probably a human finger. Then, the control section 110 moves to the next step, or Step SP65.

In Step SP65, since the control section 100 can determine that the finger placed in the authentication apparatus 100 is not a pseudo-finger on the bases of the weighted image entropy or entropies $H_{imgw}$, it generates registered person identification template data $T_{fv}$ by paring the template video data S3 representing the blood vessels pattern image generated in Step SP53 and the template entropy $T_H$ computationally determined in Step SP55 and moves to the next step, or Step SP66.

In Step SP66, the control section 110 executes a registration process by storing the registered person identification template data $T_{fv}$ in the flash memory 13 before it moves to the next step, or Step SP67, to end the blood vessels registration process.

(2-2-3) Authentication mode

If, on the other hand, it is decided to select the authentication mode for the mode of operation, the control section 110 of the authentication apparatus 100 goes into the authentication mode and controls the blood vessels shooting section 12 so as to execute an authentication process as in the case of the blood vessels shooting mode.

In this case, the drive control section 12a of the blood vessels shooting section 12 controls the operation of driving the near-infrared light sources LS and the image pickup element ID and also adjusts the lens positions of the optical lenses and the aperture value of the diaphragm DH of the optical system OP according to the video signal S10 output from the image pickup element ID and then sends out the video signal S20 output from the image pickup element ID after the adjustment to the control section 110.

The control section 110 executes a video process similar to the one it executes in the above-described blood vessels registration mode on the video signal S20 by means of the preprocessing section 21 and also an image entropy computing process similar to the one it executes in the above-described blood vessels registration mode by means of the image entropy computing block 23 and reads out the registered person identification template data $T_{fv}$ registered in the flash memory 13 in advance in the blood vessels registration mode.

Then, the control section 110 compares the video data representing the blood vessels pattern image and obtained by the preprocessing section 21 and the image entropy $H_{img}$ obtained by the image entropy computing block 23 with the temperature video data S3 and the template entropy $T_H$ of the registered person identification template data $T_{fv}$ read out from the flash memory 13 for collation and determines if the user having the finger is the registered person (authorized user) or not according to the degree of agreement of the collation.

Note that, before the above collation process, the control section 110 determines if the finger placed in the authentication apparatus 100 is a pseudo-finger or not and, if it determines that the finger is a pseudo-finger, it does not get into the collation process but determines that the authentication process ends in failure. Then, it notifies the determination.

When the control section 10 determines that the object person of authentication who placed one of his or her fingers in the authentication apparatus 100 is the registered person, it generates execution command COM3 for causing the operation processing apparatus (not shown) connected to the external interface 14 to perform a predetermined operation and transfers it to the operation processing apparatus by way of the external interface 14.

If the operation processing apparatus connected to the external interface 14 is a locked door as in the description of the first embodiment, the control section 110 transfers execution command COM3 for unlocking the door to the door.

If, on the other hand, the operation processing apparatus connected to the external interface 14 is a computer that has a plurality of operation modes and the operation modes are partly restricted, the control section 110 transfers execution command COM3 for releasing the restricted operation modes to the computer.

While two examples are cited above for the operation processing apparatus, the present invention is by no means limited thereto and some other operation processing apparatus may appropriately be selected. While the operation processing apparatus is connected to the external interface 14 in this embodiment, the software or the hardware of the operation processing apparatus may alternatively be installed in the authentication apparatus 100.

When, on the other hand, the control section 110 determines that the object person of authentication who placed one of his or her fingers in the authentication apparatus 100 is not the registered person, it displays so by way of a display section 15a of the notification section 15 and outputs a sound of notification by way of an audio output section 15b of the notification section 15 so that the authentication apparatus can notify that the object person of authentication is determined to be not the registered person.

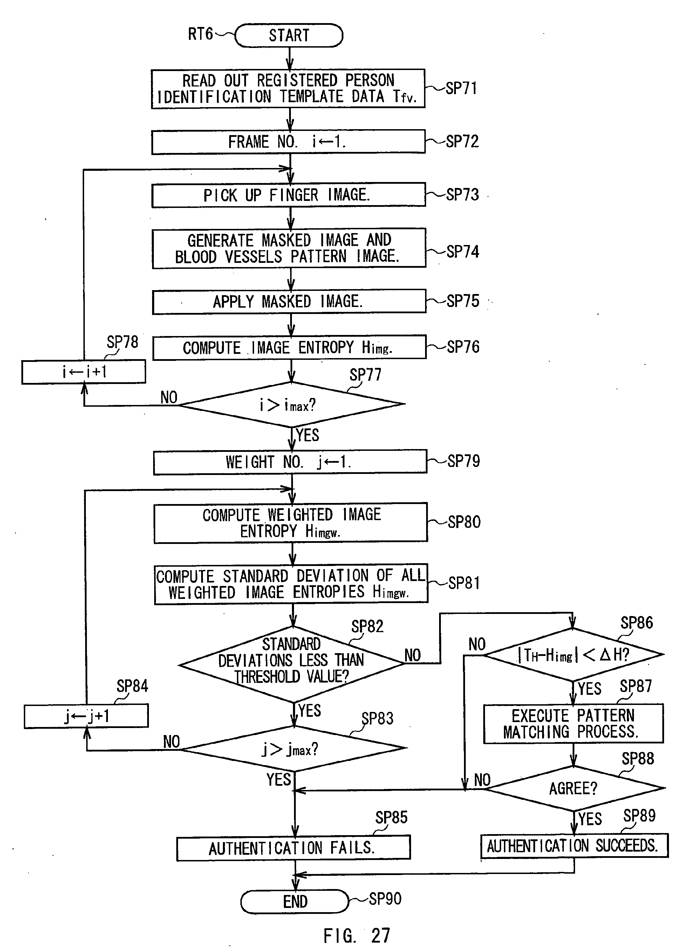

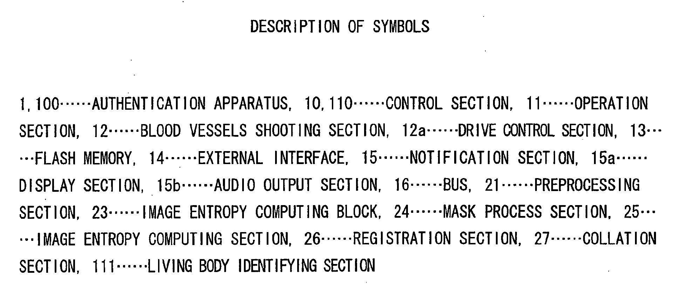

Thus, the authentication apparatus 100 executes the authentication process in the authentication mode in the above-described manner. Now, the authentication process sequence in the authentication mode will be described below by referring to FIG. 27.

Referring to FIG. 27, the control section 110 of the authentication apparatus 100 starts with the starting step of routine RT6 and proceeds to the next step, or Step SP71, where it reads out the registered person identification template data $T_{fv}$ (the template video data S3 and the template entropy $T_H$) that is registered in advance in the flash memory 13 and then moves to the next step, or Step SP12.

In Step SP72, the control section 110 sets initial value "1" for the frame number "i" in order to pick up a continuous image of the finger of the to-be-registered person before it moves to the next step, or Step SP73.

In Step SP73, the control section 110 generates a video signal S20 by shooting the user's finger by means of the blood vessels shooting section 12 and sends it out to the preprocessing section 21 of the control section 110 and also to the mask process section 24 of the image entropy computing section 23 before it moves to the next step, or Step SP74.

In Step SP74, the control section 110 generates a masked image for extracting only the finger region where the blood vessels pattern is shown according to the video signal S20 supplied from the blood vessels shooting section 12 by means of the mask process section 24 and also a video data S21 representing the blood vessels pattern image by means of the preprocessing section 21 and then moves to the next step, or Step SP75.

In Step SP75, the control section 110 generates extracted finger region image S22 by applying the masked image generated in Step SP74 to the video signal S20 supplied from the blood vessels shooting section 12 and then moves to the next step, or Step SP76.

In Step SP76, the control section 110 computationally determines the image entropy $H_{img}$ on the basis of the extracted finger region image S22 and holds it before it moves to the next step, or Step SP77.

In Step SP77, the control section 110 determines if the frame number "i" exceeds the largest number of frame number necessary for generating a continuous image for the predetermined time period or not. If the answer to the question is negative, it means that the video signal S2 for the predetermined number of frames necessary for generating a continuous image of the finger for the predetermined time period has not been obtained by shooting the finger. Then, the control section 110 moves to the next step, or Step SP78.

In Step SP78, the control section 110 increments the count value for the frame number "i" by "1" and repeats the operations from Step SP73 on.

If, on the other hand, a positive answer is obtained to the question in Step SP77, it means that the video signal S2 for the predetermined number of frames necessary for generating a continuous image of the finger for the predetermined time period has been obtained by shooting the finger. Then, the control section 110 moves to the next step, or Step SP79.

In Step SP79, the control section 110 sets initial value "1" for weight number j in order to weight the image entropy $H_{img}$ computationally determined in Step SP76 with each of weights $W_L$ through WLj of various different types showing respective distribution profiles that are different from each other and then moves to the next step, or Step SP80.

In Step SP80, the control section 110 generates image entropy $H_{imgw}$ by weighting the image entropy $H_{img}$ with the weight WL defined as weight number "1" by means of the living body identifying section 111 and then moves to the next step, or Step SP81.

In Step SP81, the control section 110 determines the change in the entropy (standard deviation) for the weighted image entropy $H_{imgw}$ generated in Step SP80 and then moves to the next step, or Step SP82.

In Step SP82, the control section 110 determines if the standard deviation of the weighted image entropy $H_{imgw}$ determined by means of the living body identifying section 111 in Step SP81 is not greater than a predetermined threshold value ("10" is selected in this case again because any pseudo-finger needs to be eliminated) or not.

If the answer to the question is positive, it means that the standard deviation of the weighted image entropy $H_{imgw}$ generated by using the weight WL that can be identified by the weight number j is small and the finger can highly probably be a pseudo-finger. Then, the control section 110 moves to the next step, or Step SP83.

In Step SP83, the control section 110 determines if the weight number j exceeds the largest value that corresponds to all the types of weight WLn or not. If the answer to the question is negative; it means that the image entropy $H_{img}$ has not been weighted by each of all the weights WLn yet. Then, the control section 110 moves to the next step, or Step SP84.

In Step SP84, the control section 110 increments the count value for the weight number j by "1" and repeats the operations from Step SP80 on to weight the image entropy $H_{img}$ with each of all the weights WLn in order to determine if the standard deviation of each of the image entropies is not greater than the threshold value or not.

If the answer to the question in Step SP83 becomes positive, it means that the standard deviation of each of all the weighted image entropies $H_{imgw}$ obtained by using the weights WLn of all the different types is small and hence the finger is highly probably a pseudo-finger. Then, the control section 110 moves to the next step, or Step SP85.

In Step SP85, since the finger placed in the authentication apparatus 100 is highly probably a pseudo-finger; the control section 110 moves to the next step, or Step SP90, without continuing the collation process of the collation section 27. Then, the control section 110 displays error message "the authentication ends in failure".

If, on the other hand, the answer to the question in Step SP82 is negative, it means that the standard deviation of the weighted image entropy $H_{imgw}$ obtained by using a predetermined weight WLn exceeds the threshold value probably because of the blood flow of a living body and other factors and therefore the finger placed in the authentication apparatus 100 is highly probably a human finger. Then, the control section 110 moves to the next step, or Step SP86.

In Step SP86, the control section 110 determines if the absolute value of the difference of the temperature entropy $T_H$ of the registered person identification template data $T_{fv}$ read out in Step SP71 and the image entropy $H_{img}$ of the object person of authentication computationally determined in Step SP76 is smaller than predetermined permissible error ΔH or not.

In this case again, it is determined if the absolute value of the difference between the template entropy $T_H$ of the registered person identification template data $T_{fv}$ and the image entropy $H_{img}$ of the object person of authentication is smaller than the predetermined permissible error ΔH or not because the image entropy $H_{img}$ in fact represents a digest value of the luminance pattern of the video signal S2 and hence it does not represent an accurate value so that the determination needs to have some latitude when comparing it with the template entropy $T_H$ at the time of collation.

If the result of the determination is negative, it means that the image entropy $H_{img}$ of the object person of authentication is not found within a certain range from the value of the template entropy $T_H$ that is registered in advance and hence the luminance distribution of the extracted finger region image S22 from which the image entropy $H_{img}$ is computed differs to a large extent from the luminance distribution of the extracted finger region image S4 from which the template entropy $T_H$ is computed. Then, the control section 110 moves to the next step, or Step SP85.

In Step SP85, the control section 110 determines that the object person of authentication does not agree with the registered person and hence the authentication failed because the absolute value of the difference between the template entropy $T_H$ and the image entropy $H_{img}$ of the object person of authentication is greater than predetermined permissible error ΔH and then moves to the next step, or Step SP90 to end the process.

If, on the other hand, the result of determination in Step SP86 is positive, it means that the image entropy $H_{img}$ of the object person of authentication is found within a certain range from the value of the template entropy $T_H$ that is registered in advance and hence the luminance distribution of the extracted finger region image S22 from which the image entropy $H_{img}$ is computed is similar to the luminance distribution of the extracted finger region image S4 from which the template entropy $T_H$ is computed so that the object person of authentication agrees with the registered person from the entropy point of view. Then, the control section 110 moves to the next step, or Step SP87.

In Step SP87, the control section 110 executes a pattern matching process, using the template video data S3 of the registered person identification template $T_{fv}$ read out in Step SP71 and the video data S21 representing the blood vessels pattern image and generated in Step SP74, and then moves to the next step, or Step SP88.

In Step SP88, the control section 110 determines if the result of the pattern matching process executed in Step SP87 indicates agreement or not. If the result of the determination is negative, it means that the object person of authentication does not agree with the registered person from the pattern matching point of view. Then, the control section 110 moves to the next step, or Step SP85, where it determines that the authentication failed so that it moves to the next step, or Step SP90 to end the authentication process.

If, on the other hand, the result of the determination in Step SP88 is positive, it means that the object person of authentication agrees with the registered person from the pattern matching point of view. Then, the control section 110 moves to the next step, or Step SP89.

In Step SP89, the control section 110 determines that the finger placed in the authentication apparatus 100 is not a pseudo-finger but a human finger from the entropy point of view and then decides that the authentication process ends with success because the object person of authentication agrees with the registered person both from the entropy point of view and the pattern matching point of view. Then, the control section 110 moves to the next step, or Step SP90 to end all the authentication process.

(2-3) Operations and advantages of second embodiment

With the above-described arrangement, in the blood vessels registration mode, the authentication apparatus 100 uses image entropy $H_{img}$ to represent the luminance distribution of the extracted finger region image S4 obtained by shooting one of the fingers of the to-be-registered person or the registered person and weights the image entropy $H_{img}$ of the finger with each of weights WLn of a plurality of different types showing respective distribution profiles that are different from each other. When none of the weighted image entropies $H_{imgw}$ exceeds the threshold value regardless of the weight WLn used there, the authentication apparatus 100 determines that the standard deviation is constant and hence unnatural for a living body. Then, it stops the registration process.

With this arrangement, it is possible for the authentication apparatus 100 to reliably eliminate a situation where a pseudo-finger is registered by error.

Additionally, in the authentication mode as in the registration mode, the authentication apparatus 100 weights the image entropy $H_{img}$ of the finger with each of weights WLn of a plurality of different types showing respective distribution profiles that are different from each other. When none of the weighted image entropies $H_{imgw}$ exceeds the threshold value regardless of the weight WLn used there, the authentication apparatus 100 determines that the standard deviation is constant and hence unnatural for a living body. Then, it determines that the authentication ends in failure without executing any collation process for the purpose of authentication.

Therefore, the authentication apparatus 100 executes an authentication process from the entropy point of view on the basis of the image entropy $H_{img}$ only when the finger placed in the authentication apparatus 100 is recognized as that of a human being on the basis of the standard deviations of the weighted image entropies $H_{imgw}$ before it executes a pattern matching process. Thus, the authentication apparatus 100 can reliably prevent any fraudulent user of a pseudo-finger from being erroneously recognized as registered person.

In this way, the authentication apparatus 100 can eliminate any pseudo-finger before an authentication process and executes an authentication process from the point of view of image entropy $H_{img}$. Thus, it can effectively prevent any sham, who may be a fraudulent user trying to use a pseudo-finger as human finger or mimic a blood vessels pattern.

Thus, with the above-described arrangement, the authentication apparatus 100 can highly accurately determines if a finger is a pseudo-finger or not and executes an authentication process using an information entropy or template matching so that it can highly probably prevent any authentication error from taking place due to a sham by means of a simple arrangement.

(3) Other embodiments

While video signals S2 and S20 are generated by picking up a blood vessels pattern of veins at the front end of a finger of a human body that is selected as predetermined site in the above description in the first and second embodiments, the present invention is by no means limited thereto and video signals S2 and S20 may alternatively be generated by picking a blood vessels pattern of veins of any other site of a human body such as the palm of hand or the face.

While an authentication process is executed from an entropy point of view in Step SP16 (or Step SP86) by determining if the absolute value of the difference between the template entropy $T_H$ and the image entropy $H_{img}$ of the object person of authentication is smaller than predetermined permissible error $\Delta H$ or not and a pattern matching process is executed in Step SP17 (or Step SP87) only when the answer to the question is positive in the above-described first embodiment (or the second embodiment, whichever appropriate), the present invention is by no means limited thereto and an authentication process may alternatively be executed after a pattern matching process and the pattern matching process shows an agreement.

While the image entropy $H_{img}$ is weighted by each of a plurality of weights WLn in the above-described second embodiment, the present invention is by no means limited thereto and it may alternatively be so arranged that the finger in question is determined to be that of a living body or a non-living body on the basis of the standard deviation of the weighted image entropy $H_{imgw}$ obtained by weighting the image entropy $H_{img}$ with a weight WLn of a single type if the weight WLn shows a distribution profile different from that of the image entropy $H_{img}$.

Additionally, while the image entropy $H_{img}$ is weighted with each of a plurality of weights WLn of a plurality of different types showing respective distribution profiles that are different from each other in the above-described second embodiment, the present invention is by no means limited thereto and, alternatively, the image entropy $H_{img}$ may be weighted with each of a plurality of weights WLn that are different by no means relative to each other.

While the control section 10 or 110 reads out the registration program or the authentication program from the ROM and unfolds it on the RAM to execute the program in a blood vessels registration mode or in an authentication mode, whichever appropriate, appropriately controlling the blood vessels shooting section 12, the flash memory 13, the external interface 14 and the notification section 15 in each of the above-described first and second embodiments, the present invention is by no means limited thereto and, alternatively, the registration program or the authentication program installed from a recording medium such as a CD (compact disc), a DVD (digital versatile disc) or a semiconductor memory or downloaded from the Internet may be executed in a blood vessels registration mode or in an authentication mode, whichever appropriate.

While an authentication apparatus is realized by means of software combining the blood vessels shooting section 12 as image pickup means, the preprocessing section 21 as characteristic parameter extracting means, the image entropy computing section 25 as image entropy computing means, the living body identifying section 111 as weighted image entropy computing means and bio-identification means, and the collation section 27 as authentication means, in the above description of the preferred embodiments, the present invention is by no means limited thereto and an authentication apparatus may alternatively be realized by means of hardware, combining any of various image pickup means, any of various characteristic parameter extracting means, any of various image entropy computing means, any of various registration means, any of various weighted image entropy computing means, any of various bio-identification means and any of various authentication means.

An authentication apparatus, a registration apparatus, a registration method, a registration program, an authentication method and an authentication program according to the embodiments of the present invention can suitably find applications in the field of biometrics authentication using, for example, an iris or the like.

It should be understood by those skilled in the art that various modifications, combinations, sub-combinations and alterations may occur depending on design requirements and other factors insofar as they are within the scope of the appended claims or the equivalents thereof.

**Claims**

**1.** An authentication apparatus comprising:

image pickup means for generating an image of a subject of bio-identification by shooting the subject of bio-identification in a predetermined biological site;
characteristic parameter extraction means for extracting a characteristics parameter for the subject of bio-identification by executing a predetermined characteristics extracting process on the image of the subject of bio-identification;
image entropy computing means for computationally determining the image entropy according to the image of the subject of bio-identification; and
registration means for generating registered person identification information by pairing the characteristics parameter and the image entropy and storing it in predetermined memory means.

**2.** The authentication apparatus according to claim 1, wherein
the image entropy computing means executes a mask process of masking the region of the picked up image of the subject of bio-identification other than that of a predetermined site before computing the image entropy.

3. The authentication apparatus according to claim 1, wherein
the image pickup means generates the image of the subject of bio-identification by shooting blood vessels a subject of bio-identification.

4. The authentication apparatus according to claim 1, further comprising:

authentication means for ultimately determining the authenticity of the object person of authentication by determining the authenticity of the object person of authentication by comparing the image entropy of the object person of authentication' computed by the image entropy computing means and the registered person identification information registered in the registration means in advance and then comparing the characteristic parameter of the object person of authentication extracted by the characteristic parameter extracting means and the image entropy of the registered person identification information registered in the registration means in advance for collation.

5. A registration method comprising:

an image pickup step of generating an image of a subject of bio-identification by shooting the subject of bio-identification in a predetermined biological site;
a characteristic parameter extraction step of extracting a characteristics parameter for the subject of bio-identification by executing a predetermined characteristics extracting process on the image of the subject of bio-identification;
an image entropy computing step of computationally determining the image entropy according to the image of the subject of bio-identification; and
a registration step of generating registered person identification information by pairing the characteristics parameter and the image entropy and storing it in a predetermined memory section:

6. A registration program for causing a predetermined information processing apparatus to execute:

an image pickup step of generating an image of a subject of bio-identification by shooting the subject of bio-identification in a predetermined biological site;
a characteristic parameter extraction step of extracting a characteristics parameter for the subject of bio-identification by executing a predetermined characteristics extracting process on the image of the subject of bio-identification;
an image entropy computing step of computationally determining the image entropy according to the image of the subject of bio-identification; and
a registration step of generating registered person identification information by pairing the characteristics parameter and the image entropy and storing it in a predetermined memory section.

7. A registration apparatus comprising:

image pickup means for generating a plurality of images of a subject of bio-identification by shooting the subject of bio-identification in a predetermined biological site of a to-be-registered person for a plurality of times within a predetermined time period;
characteristic parameter extraction means for extracting a plurality of characteristics parameters for the subject of bio-identification by executing a predetermined characteristics extracting process on the plurality of images of the subject of bio-identification;
image entropy computing means for computationally determining the plurality of image entropies of the plurality of images of the subject of bio-identification;
weighted image entropy computing means for computationally determining a plurality of types of weighted image entropies by weighting the plurality of image entropies with a plurality of types of weights of different patterns;
bio-identification means for determining the degree of dispersion of the plurality of types of weighted image entropies, identifying the predetermined site of the to-be-registered person as a living body or a non-living body according to the degree of dispersion; and
registration means for generating registered person identification information by pairing the characteristics parameters and the image entropies and storing it in a predetermined memory means only when the predetermined site is identified as a living body by the bio-identification means.

8. The registration apparatus according to claim 7, wherein
the bio-identification means determines the standard deviations of the weighted image entropies weighted by the plurality of types of weights as degrees of dispersion and identifies the predetermined site of the to-be-registered person as a site of a non-living body when all the standard deviations are not greater than a predetermined threshold value.

9. The registration apparatus according to claim 7, wherein
the image entropy computing means executes a mask process of masking the region of the picked up image of the subject of bio-identification other than that of a' predetermined site before computing the image entropy.

10. The registration apparatus according to claim 7, wherein
the image pickup means generates the image of a subject of bio-identification by shooting blood vessels as the subject of bio-identification.

11. A registration method comprising:

an image pickup step of generating a plurality of images of a subject of bio-identification by shooting the subject of bio-identification in a predetermined biological site of a to-be-registered person for a plurality of times within a predetermined time period;
a characteristic parameter extraction step of extracting a plurality of characteristics parameters for the subject of bio-identification by executing a predetermined characteristics extracting process on the plurality of images of the subject of bio-identification;
an image entropy computing step of computationally determining the plurality of image entropies of the plurality of images of the subject of bio-identification;
a weighted image entropy computing step of computationally determining a plurality of types of weighted image entropies by weighting the plurality of image entropies with a plurality of types of weights of different patterns;
a bio-identification step of determining the degree of dispersion of the plurality of types of weighted image entropies, identifying the predetermined site of the to-be-registered person as a living body or a non-living body according to the degree of dispersion; and
a registration step of generating registered person identification information by pairing the characteristics parameters and the image entropies and storing it in a predetermined memory section only when the predetermined site is identified as a living body in the bio-identification step.

12. A registration program for causing a predetermined information processing apparatus to execute:

an image pickup step of generating a plurality of images of a subject of bio-identification by shooting the subject of bio-identification in a predetermined biological site of a to-be-registered person for a plurality of times within a predetermined time period;
a characteristic parameter extraction step of extracting a plurality of characteristics parameters for the subject of bio-identification by executing a predetermined characteristics extracting process on the plurality of images of the subject of bio-identification;
an image entropy computing step of computationally determining the plurality of image entropies of the plurality of images of the subject of bio-identification;
a weighted image entropy computing step of computationally determining a plurality of types of weighted image entropies by weighting the plurality of image entropies with a plurality of types of weights of different patterns;
a bio-identification step of determining the degree of dispersion of the plurality of types of weighted image entropies, identifying the predetermined site of the to-be-registered person as a living body or a non-living body according to the degree of dispersion; and
a registration step of generating registered person identification information by pairing the characteristics parameters and the image entropies and storing it in a predetermined memory section only when the predetermined site is identified as a living body in the bio-identification step.

13. An authentication apparatus comprising:

image pickup means for generating a plurality of images of a subject of bio-identification by shooting the subject of bio-identification in a predetermined (biological?) site of a to-be-registered person for a plurality of times within a predetermined time period;
characteristic parameter extraction means for extracting a plurality of characteristics parameters for the subject of bio-identification by executing a predetermined characteristics extracting process on the plurality of images of the subject of bio-identification;

image entropy computing means for computationally determining the plurality of image entropies of the plurality of images of the subject of bio-identification;

weighted image entropy computing means for computationally determining a plurality of types of weighted image entropies by weighting the plurality of image entropies with a plurality of types of weights of different patterns;

bio-identification means for determining the degree of dispersion of the plurality of types of weighted image entropies, identifying the predetermined site of the to-be-registered person as a living body or a non-living body according to the degree of dispersion; and

authentication means for denying the authenticity of the object person of authentication at the time of identification of the predetermined site as that of a non-living body by the bio-identification means and determining the authenticity of the object person of authentication by executing an authentication process only after of recognizing the predetermined site as that of a living body.

14. The authentication apparatus according to claim 13, wherein

the authentication means ultimately determines the authenticity of the object person of authentication by determining the authenticity of the object person of authentication by comparing the image entropy of the object person of authentication computed by the image entropy computing means and the registered person identification information registered in advance and then comparing the characteristic parameter of the object person of authentication extracted by the characteristic parameter extracting means and the image entropy of the registered person identification information for collation.

15. An authentication method comprising:

an image pickup step of generating a plurality of images of a subject of bio-identification by shooting the subject of bio-identification in a predetermined biological site of a to-be-registered person for a plurality of times within a predetermined time period;

a characteristic parameter extraction step of extracting a plurality of characteristics parameters for the subject of bio-identification by executing a predetermined characteristics extracting process on the plurality of images of the subject of bio-identification;

an image entropy computing step of computationally determining the plurality of image entropies of the plurality of images of the subject of bio-identification;

a weighted image entropy computing step of computationally determining a plurality of types of weighted image entropies by weighting the plurality of image entropies with a plurality of types of weights of different patterns;

a bio-identification step of determining the degree of dispersion of the plurality of types of weighted image entropies, identifying the predetermined site of the to-be-registered person as a living body or a non-living body according to the degree of dispersion; and

an authentication step of denying the authenticity of the object person of authentication at the time of identification of the predetermined site as that of a non-living body by the bio-identification section and determining the authenticity of the object person of authentication by executing an authentication process only after recognizing the predetermined site as that of a living body.

16. An authentication program for causing a predetermined information processing apparatus to execute:

an image pickup step of generating a plurality of images of a subject of bio-identification by shooting the subject of bio-identification in a predetermined (biological?) site of a to-be-registered person for a plurality of times within a predetermined time period;

a characteristic parameter extraction step of extracting a plurality of characteristics parameters for the subject of bio-identification by executing a predetermined characteristics extracting process on the plurality of images of the subject of bio-identification;

an image entropy computing step of computationally determining the plurality of image entropies of the plurality of images of the subject of bio-identification;

a weighted image entropy computing step of computationally determining a plurality of types of weighted image entropies by weighting the plurality of image entropies with a plurality of types of weights of different patterns;

a bio-identification step of determining the degree of dispersion of the plurality of types of weighted image entropies, identifying the predetermined site of the to-be-registered person as a living body or a non-living body according to the degree of dispersion; and

an authentication step of denying the authenticity of the object person of authentication at the time of identification of the predetermined site as that of a non-living body in the bio-identification section and determining the authenticity of the object person of authentication by executing an authentication process only after recognizing the predetermined site as that of a living body.

NOT MASKED (H$_{img}$=7. 46)

(A)

MASKED (H$_{img}$=4. 72)

(B)

OTHER THAN MASKED REGION (H$_{img}$=7. 44)

(C)

FIG. 1

PICKED UP IMAGE
OF PSEUDO-FINGER

(A 1)

PICKED UP IMAGE
OF HUMAN FINGER 1

(B 1)

PICKED UP IMAGE
OF HUMAN FINGER 2

(C 1)

PICKED UP IMAGE
OF HUMAN FINGER 3

(D 1)

MASKED IMAGE OF
PSEUDO-FINGER

(A 2)

MASKED IMAGE OF
HUMAN FINGER 1

(B 2)

MASKED IMAGE OF
HUMAN FINGER 2

(C 2)

MASKED IMAGE OF
HUMAN FINGER 3

(D 2)

EXTRACTED IMAGE OF
FINGER REGION OF
PSEUDO-FINGER
$(H_{img}=7.06)$

(A 3)

EXTRACTED IMAGE OF
FINGER REGION OF
HUMAN FINGER 1
$(H_{img}=5.96)$

(B 3)

EXTRACTED IMAGE OF
FINGER REGION OF
HUMAN FINGER 2
$(H_{img}=6.61)$

(C 3)

EXTRACTED IMAGE OF
FINGER REGION OF
HUMAN FINGER 3
$(H_{img}=6.71)$

(D 3)

FIG. 2

EP 2 073 171 A1

FIG. 3

FIG. 4

EP 2 073 171 A1

10

S2, S20 → | PREPROCESSING SECTION | 21 → S3, S21 ————————————————→ | REGISTRATION SECTION | 26 → T_fv

~T_fv

23 IMAGE ENTROPY COMPUTING BLOCK

S2, S20 → | MASK PROCESS SECTION | 24 → S4, S22 → | IMAGE ENTROPY COMPUTING SECTION | 25 → T_H, T_img → | COLLATION SECTION | 27 →

FIG. 5

RT1 — START

SP1
PICK UP FINGER IMAGE.

SP2
GENERATE MASKED IMAGE AND
BLOOD VESSELS PATTERN IMAGE
(TEMPLATE VIDEO DATA S3).

SP3
APPLY MASKED IMAGE.

SP4
COMPUTE IMAGE ENTROPY $H_{img}$
(TEMPLATE ENTROPY $T_H$).

SP5
REGISTER TEMPLATE VIDEO DATA
S3 AND TEMPLATE ENTROPY $T_H$
AS REGISTERED PERSON
IDENTIFICATION DATA $T_{fv}$.

END — SP6

FIG. 6

RT2~( START )

SP11
READ OUT REGISTERED PERSON
IDENTIFICATION TEMPLATE DATA T$_{fv}$.

SP12
PICK UP FINGER IMAGE.

SP13
GENERATE MASKED IMAGE AND
BLOOD VESSELS PATTERN IMAGE.

SP14
APPLY MASKED IMAGE.

SP15
COMPUTE IMAGE ENTROPY H$_{img}$ OF
OBJECT PERSON OF AUTHENTICATION.

SP16
NO ← $|T_H - H_{img}| < \Delta H?$

YES
SP17
EXECUTE PATTERN MATCHING PROCESS.

SP18
NO ← AGREE?

YES
SP20
AUTHENTICATION FAILS.

SP19
AUTHENTICATION SUCCEEDS.

( END )~SP21

FIG. 7

34

FIG. 8

EP 2 073 171 A1

FIG. 9

FIG. 10

RT3 — ( START )

SP31

log2X FOUND
IN LOGARITHMIC
TABLE?

NO

YES    SRT2 APPROXIMATE
COMPUTATION ROUTINE

SRT1 LOGARITHMIC TABLE
REFERRING ROUTINE

SP33

DETERMINE
EXPONENT (α) OF 2.

SP34

DETERMINE POINT OF
INTERNAL DIVISION
AND COMPUTE LOGARITHMIC
VALUE OF log2X BY
APPROXIMATE COMPUTATION.

SP32

DETERMINE LOGARITHMIC
VALUE OF log2X
ACCORDING TO
LOGARITHMIC TABLE.

( END ) — SP35

FIG. 11

RT4 — START

SP41
log₂X FOUND IN EXPONENTIALLY MULTIPLIED LOGARITHMIC TABLE?

NO

YES

SRT4 APPROXIMATE COMPUTATION ROUTINE

SRT3 LOGARITHMIC TABLE REFERRING ROUTINE

SP43
DETERMINE EXPONENT (α) OF 2.

SP44
DETERMINE POINT OF INTERNAL DIVISION, COMPUTE LOGARITHMIC VALUE OF log₂X BY APPROXIMATE COMPUTATION AND THEN PERFORM SHIFT OPERATION.

SP42
DETERMINE LOGARITHMIC VALUE OF log₂X ACCORDING TO EXPONENTIALLY MULTIPLIED LOGARITHMIC TABLE AND THEN PERFORM SHIFT OPERATION.

END — SP45

FIG. 12

FIG. 13

FIG. 14

FIG. 15

FIG. 16

FIG. 17

FIG. 18

(A)

(B)

FIG. 19

(A)

(B)

FIG. 20

| | AVERAGE VALUE | | | STANDARD DEVIATION ($\times 10^{-3}$) | | |
| | WEIGHT | | | WEIGHT | | |
| | NONE | W$_L$ | DIFFERENCE | NONE | W$_L$ | DIFFERENCE |
|---|---|---|---|---|---|---|
| PSEUDO-FINGER | 7.05 | 5.53 | 1.52 | 3.3 | 8.9 | 5.6 |
| HUMAN FINGER 1 | 5.97 | 4.75 | 1.22 | 5.7 | 80.7 | 75.0 |
| HUMAN FINGER 2 | 6.59 | 5.81 | 0.78 | 10.7 | 6.2 | 4.5 |
| HUMAN FINGER 3 | 6.70 | 5.44 | 1.26 | 4.9 | 20.8 | 15.9 |

FIG. 21

(A)

(B)

FIG. 22

EP 2 073 171 A1

(A) CHANGE IN IMAGE ENTROPY OF CONTINUOUS IMAGE DUE TO WEIGHT WL

(B) CHANGE IN IMAGE ENTROPY OF CONTINUOUS IMAGE DUE TO WEIGHT WL2

FIG. 23

| | STANDARD DEVIATION($\times 10^{-3}$) | | |
| | WEIGHT | | |
| | NONE | WL | WL2 |
|---|---|---|---|
| PSEUDO-FINGER | 3. 3 | 8. 9 | 5. 6 |
| HUMAN FINGER 1 | 5. 7 | 80. 7 | 93. 1 |
| HUMAN FINGER 2 | 10. 7 | 6. 2 | 14. 4 |
| HUMAN FINGER 3 | 4. 9 | 20. 8 | 19. 2 |

FIG. 24

FIG. 25

RT5 — ( START )

FRAME NO. $i \leftarrow 1$. — SP51

PICK UP FINGER IMAGE. — SP52

GENERATE MASKED IMAGE AND
BLOOD VESSELS PATTERN IMAGE
(TEMPLATE VIDEO DATA S3). — SP53

APPLY MASKED IMAGE. — SP54

COMPUTE IMAGE ENTROPY $H_{img}$. — SP55

SP57
$i \leftarrow i+1$

NO ← SP56 $i > i_{max}$?

YES

WEIGHT NO. $j \leftarrow 1$. — SP58

COMPUTE WEIGHTED IMAGE
ENTROPY $H_{imgw}$. — SP59

COMPUTE STANDARD DEVIATION OF ALL
WEIGHTED IMAGE ENTROPIES $H_{imgw}$. — SP60

SP61
STANDARD
DEVIATIONS LESS THAN
THRESHOLD VALUE?   NO

SP65
GENERATE REGISTERED
PERSON IDENTIFICATION
TEMPLATE DATA $T_{fv}$.

YES

SP63
$j \leftarrow j+1$

NO ← SP62 $j > j_{max}$?

SP66
REGISTRATION OK.

YES

REGISTRATION NG. — SP64

( END ) — SP67

FIG. 26

RT6 —◯ START ◯

READ OUT REGISTERED PERSON IDENTIFICATION TEMPLATE DATA $T_{fv}$. — SP71

FRAME NO. $i \leftarrow 1$. — SP72

PICK UP FINGER IMAGE. — SP73

GENERATE MASKED IMAGE AND BLOOD VESSELS PATTERN IMAGE. — SP74

APPLY MASKED IMAGE. — SP75

COMPUTE IMAGE ENTROPY $H_{img}$. — SP76

SP78 — $i \leftarrow i+1$

NO — $i > i_{max}$? — SP77

YES

WEIGHT NO. $j \leftarrow 1$. — SP79

COMPUTE WEIGHTED IMAGE ENTROPY $H_{imgw}$. — SP80

COMPUTE STANDARD DEVIATION OF ALL WEIGHTED IMAGE ENTROPIES $H_{imgw}$. — SP81

STANDARD DEVIATIONS LESS THAN THRESHOLD VALUE? — SP82 — NO

SP84 — $j \leftarrow j+1$

NO — $j > j_{max}$? — SP83

YES

NO — $|T_H - H_{img}| < \Delta H$? — SP86

YES — SP87

EXECUTE PATTERN MATCHING PROCESS. — SP87

AGREE? — SP88

NO

YES — SP89

AUTHENTICATION FAILS. — SP85

AUTHENTICATION SUCCEEDS. — SP89

END — SP90

FIG. 27

DESCRIPTION OF SYMBOLS

1, 100······AUTHENTICATION APPARATUS, 10, 110······CONTROL SECTION, 11······OPERATION SECTION, 12······BLOOD VESSELS SHOOTING SECTION, 12a······DRIVE CONTROL SECTION, 13······FLASH MEMORY, 14······EXTERNAL INTERFACE, 15······NOTIFICATION SECTION, 15a······DISPLAY SECTION, 15b······AUDIO OUTPUT SECTION, 16······BUS, 21······PREPROCESSING SECTION, 23······IMAGE ENTROPY COMPUTING BLOCK, 24······MASK PROCESS SECTION, 25······IMAGE ENTROPY COMPUTING SECTION, 26······REGISTRATION SECTION, 27······COLLATION SECTION, 111······LIVING BODY IDENTIFYING SECTION

## INTERNATIONAL SEARCH REPORT

International application No.

PCT/JP2007/072709

### A. CLASSIFICATION OF SUBJECT MATTER
*G06T7/00(2006.01)i*

According to International Patent Classification (IPC) or to both national classification and IPC

### B. FIELDS SEARCHED
Minimum documentation searched (classification system followed by classification symbols)
G06T7/00

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2003-516572 A  (Sun Micro Systems Inc.), 13 May, 2003 (13.05.03), Par. Nos. [0018], [0051] & WO 2001/043080 A1    & US 6883716 B1 & CN 1398385 A           & CA 2393642 A1 & AU 777437 B | 1-16 |
| A | JP 61-221883 A  (Fujitsu Ltd.), 02 October, 1986 (02.10.86), Full text; all drawings & US 4728186 A        & FI 860862 A & EP 0194783 B1       & FI 88752 B | 1-16 |

☒  Further documents are listed in the continuation of Box C.        ☐  See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 06 December, 2007 (06.12.07) | 18 December, 2007 (18.12.07) |

| Name and mailing address of the ISA/ Japanese Patent Office | Authorized officer |
|---|---|
| Facsimile No. | Telephone No. |

Form PCT/ISA/210 (second sheet) (April 2007)

**INTERNATIONAL SEARCH REPORT**

| International application No. |
| --- |
| PCT/JP2007/072709 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2002-092616 A  (Hitachi, Ltd.),<br>29 March, 2002 (29.03.02),<br>Par. Nos. [0001], [0002], [0028] to [0035];<br>Fig. 12<br>& US 2002/048014 A1 | 2,3,9,10 |

Form PCT/ISA/210 (continuation of second sheet) (April 2007)

**EP 2 073 171 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003331272 A